(19) Europäisches Patentamt
European Patent Office
Office européen des brevets

(11) Veröffentlichungsnummer : **0 457 184 B1**

(12) **EUROPÄISCHE PATENTSCHRIFT**

(45) Veröffentlichungstag der Patentschrift : **17.08.94 Patentblatt 94/33**

(21) Anmeldenummer : **91107498.7**

(22) Anmeldetag : **08.05.91**

(51) Int. Cl.$^5$ : **C09B 29/15,** C09B 27/00, C09B 29/033, C09B 29/036, C09B 29/042, G01N 31/22, G01N 33/84

# (54) Naphtholderivate, Verfahren zu deren Herstellung und deren Verwendung.

(30) Priorität : **15.05.90 DE 4015591**

(43) Veröffentlichungstag der Anmeldung : **21.11.91 Patentblatt 91/47**

(45) Bekanntmachung des Hinweises auf die Patenterteilung : **17.08.94 Patentblatt 94/33**

(84) Benannte Vertragsstaaten : **AT BE CH DE DK ES FR GB GR IT LI LU NL SE**

(56) Entgegenhaltungen :
**CH-A- 461 679**
**DE-A- 1 054 740**
**FR-A- 2 277 832**
**US-A- 4 301 068**
**CHEMICAL ABSTRACTS, vol. 93, no. 16, 20. Oktober 1980, Columbus, Ohio, US; abstract no. 151669W, Fuji Photo Film Co.; "Azo compounds", Seite 75**

(73) Patentinhaber : **BOEHRINGER MANNHEIM GMBH**
**D-68298 Mannheim (DE)**

(72) Erfinder : **Rittersdorf, Walter, Dr. rer. nat.**
**Kasseler Strasse 6**
**W-6800 Mannheim 31 (DE)**
Erfinder : **Guethlein, Werner, Dr. rer. nat.**
**Im Sennteich 31**
**W-6800 Mannheim 24 (DE)**
Erfinder : **Vogel, Peter, Dr. rer. nat.**
**Schubertweg 5**
**W-6944 Hemsbach (DE)**
Erfinder : **Thym, Detlef, Dr. rer. nat.**
**D 3, 2**
**W-6800 Mannheim 1 (DE)**

**EP 0 457 184 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Naphtholderivate, ein Verfahren zu deren Herstellung und deren Verwendung als pH-Indikatoren. Weiter betrifft die Erfindung ein Verfahren zur Bestimmung eines Ions in einer wässrigen Flüssigkeit, wobei das Ion in eine mit der wässrigen Flüssigkeit nicht mischbare Phase gelangt und ein dort anwesender pH-Indikator dadurch eine Farbänderung erfährt, welche zur Bestimmung des Ions herangezogen wird.

Außerdem betrifft die Erfindung ein Mittel zur Bestimmung eines Ions in einer wässrigen Flüssigkeit, enthaltend einen Ionophor und einen pH-Indikator.

Schließlich betrifft die Erfindung die Verwendung eines Naphtholderivates zur Herstellung eines Mittels zur Bestimmung eines Ions.

Zur Bestimmung von Ionen, speziell Alkali- und Erdalkali-Ionen in Lösungen sind zahlreiche Methoden bekannt. Die größte Bedeutung haben hierbei die Flammenphotometrie, die Atomabsorptionsspektrometrie und neuerdings auch ionenselektive Elektroden erlangt. Alle diese Verfahren bedürfen eines großen apparativen Aufwandes. Aus diesem Grunde ist man bemüht, nach Möglichkeiten zu suchen, diese Ionen nach für den Anwender einfach zu handhabenden Verfahren zu bestimmen. Solche Verfahren sind u. a. interessant für die schnelle Bestimmung von Natrium-Ionen bei der Meerwasserentsalzung oder für die schnelle Bestimmung von Calcium-Ionen bei der Enthärtung von Wasser. Besonders wichtig sind schnell durchzuführende und einfach zu handhabende Methoden bei der Bestimmung von Ionen, insbesondere Alkaliionen, wie Natrium- und Kalium-Ionen in Körperflüssigkeiten, wie Blut, Plasma, Serum oder Urin, u. a. in der Labor- und Notfalldiagnostik von Herz- und Kreislauferkrankungen, Erkrankungen der Muskulatur, Nierenerkrankungen oder Schockzuständen verschiedener Ursachen. Lithium-Bestimmungen werden beispielsweise bei der Kontrolle von Antidepressions-Therapien benötigt.

Zur einfachen Bestimmung von Ionen, insbesondere von Alkali-Ionen, die für die o. g. diagnostischen Fragestellungen besonders wichtig sind, sind zahlreiche Verfahren bekannt, die auf der Flüssig-Flüssig-Extraktion farbiger Anionen beruhen. Hierbei wird der wässrigen Lösung des Kations ein anionischer Farbstoff zugesetzt und danach wird mit einem mit Wasser nicht mischbaren Lösungsmittel, das ein Ionophor enthält, ausgeschüttelt. Das Ionophor, ein Komplexbildner für die zu bestimmenden Kationen, wie beispielsweise Alkali-Ionen, zieht mit dem Ion die ihm proportionale Menge des Farbstoffs in die organische Phase. Nach der Abtrennung der wässrigen Phase (mit dem überschüssigen Farbstoff) wird die organische Phase dann visuell oder photometrisch ausgewertet.

Diese Methode ist zwar in der Naßchemie weit verbreitet, eignet sich aber nur wenig für die sogenannte Trockenchemie. Unter diesem Begriff versteht man Testträger, auch Schnelldiagnostica genannt, bei denen alle für die Nachweisreaktion benötigten Reagenzien im trockenen Zustand in oder auf einer oder mehreren Trägermatrices, wie saugfähigen oder quellbaren Materialien, vorliegen. Zur quantitativen Bestimmung einer Substanz wird eine flüssige Probe auf den Testträger aufgebracht und dort mit den zur Bestimmungsreaktion notwendigen Reagenzien in Kontakt gebracht. Als Maß für die zu bestimmende Substanz entsteht ein Signal, das gemessen werden kann. Wenn das Signal in einer Farbbildung oder Farbänderung besteht, kann diese visuell oder photometrisch, vorzugsweise remissionsphotometrisch ausgewertet werden.

Der Einfachheit des Testträgerprinzips widerspricht es, zur Bestimmung eines Ions der Probe einen Farbstoff zusetzen und dann dessen Überschuß entfernen zu müssen. Es nimmt daher nicht wunder, daß eine solche aus EP-A-0 041 175 bekannte Methode für einen Trockentest keine Bedeutung erlangt hat.

Besser geeignet für Testträger sind Bestimmungsverfahren für Kationen, die auf dem Prinzip einer sogenannten "heterogenen pH-Reaktion" basieren.

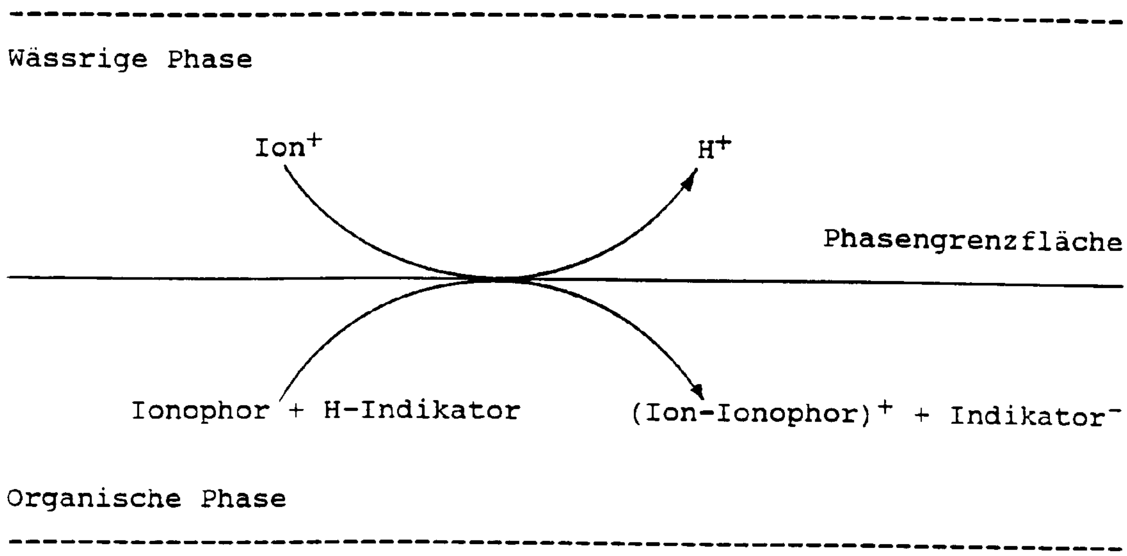


Es liegt hier ein Zwei-Phasensystem mit einer wässrigen und einer organischen Phase vor. In der organischen Phase ist ein für das nachzuweisende Kation spezifischer Ionophor und ein pH-Indikator gelöst. Beide chemischen Individuen können auch als Chromoionophor, d. h. über eine chemische Bindung zu einem einzigen Molekül vereint vorliegen. An der Grenzfläche beider Phasen wird das nachzuweisende Ion von dem Ionophor aufgenommen, in die organische Phase transportiert und liegt dort dann als Ion-Ionophor-Komplex vor. Zum Ladungsausgleich wird der ebenfalls in der organischen Phase befindliche pH-Indikator veranlaßt, ein Proton abzugeben, welches in die wässrige Phase übertritt. So entsteht eine zu der ursprünglich in der wässrigen Phase vorhandenen Konzentration des nachzuweisenden Ions proportionale Menge an farbigem Indikatoranion.

Für Flüssig-Flüssig-Extraktionen ist dieses Prinzip erstmalig bei E.S. Hyman, Biophysical Society Abstracts, 1971, 72a erwähnt und zwar mit Valinomycin als Ionophor und Tetrabromphenolphthaleinäthylester als pH-Indikator.

Tetrabromphenolphthaleinäthylester ist als pH-Indikator auch in EP-A-0 125 555 in einem Testträger zur Bestimmung von Ionen beschrieben.

Die Verbindung ist an sich nicht sehr beständig, da sie hydrolyseempfindlich ist. Das bei der Hydrolyse entstehende Tetrabromphenolphthalein ist als pH-Indikator für den beschriebenen Zweck unwirksam, was zu Störungen der Nachweisreaktion führt.

Indonaphtholderivate mit verschieden langen Alkyl-Seitenketten sind insbesondere in EP-A-0 128 317 und EP-A-0 128 318 für Testträger zur Bestimmung von Ionen beschrieben. Indonaphthole sind, wenn sie längerkettig substituiert sind, was zur Erreichung der für ausreichende Löslichkeit in der organischen Phase nötigen Lipophilie notwendig ist, synthetisch schwer zugänglich und damit teuer.

Chromoionophore sind für Flüssig-Flüssig-Extraktionen bei K. Ueno et al., Studies in Physical and Theoretical Chemistry 27, 279 -293 (1982) sowie H. Nakamura, Bunseki Kagaku 31, E 131 - E 134 (1982) beschrieben. Für Testträger zur Bestimmung von Ionen finden sich Erwähnungen von Chromionophoren in EP-A-0 085 320 und EP-A-0 141 647. Diese Verbindungsklasse ist ebenfalls präparativ schwer zugänglich und daher teuer. Außerdem ist man in der Gestaltung eines Tests durch das vorgegebene Verhältnis von Chromophor zu Ionophor stark eingeengt.

Erfindungsgemäß sollten die Nachteile des Standes der Technik durch die Bereitstellung neuer Substanzen beseitigt werden.

Die Substanzen sollten leicht zugänglich, d. h. preiswert und relativ einfach zu synthetisieren sein und sie sollten bei gleichem chemischem Grundkörper leicht variierbar sein, um für verschiedene Einsatzzwecke einen jeweils optimalen pH-Indikator zu haben, der empfindliche Messungen erlaubt.

Weiter sollten die neuen Substanzen einen Farbumschlagspunkt in nichtwässrigen Medien besitzen, der eine Untersuchung wässriger Proben auf Ionen nach dem Prinzip der heterogenen pH-Reaktion gestattet, deren pH zwischen 5 und 10 liegt.

Diese Aufgabe wird durch die in den Patentansprüchen charakterisierte Erfindung gelöst.

Gegenstand der Erfindung sind Naphtholderivate der allgemeinen Formel I

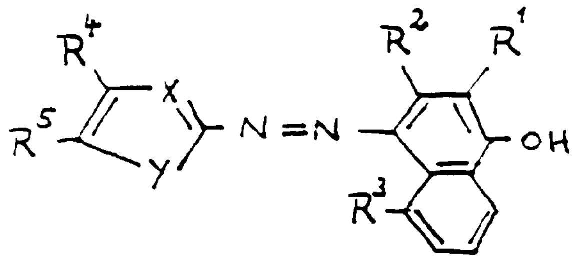

(I)

in der

R¹, R², R³ gleich oder verschieden sind und jeweils Wasserstoff eine Alkyl- oder Alkoxygruppe darstellen, wobei mindestens einer der Reste ein ($C_8$-$C_{30}$)-Alkyl- oder Alkoxyrest ist,

$R^4$ Wasserstoff oder eine Alkylgruppe,

$R^5$ eine Nitrogruppe, eine durch Halogen substituierte Alkylgruppe, eine Cyanogruppe, eine Sulfonamidgruppe oder eine Alkylsulfonylgruppe,

X Stickstoff oder den Rest $CR^6$ und

Y Schwefel oder den Rest $CR^7 = CR^8$

wobei $R^6$, $R^7$, $R^8$ gleich oder verschieden sind und jeweils Wasserstoff, Halogen, eine Nitrogruppe, eine Cyanogruppe, eine Alkyl- oder durch Halogen substituierte Alkylgruppe oder eine Alkylsulfonylgruppe bedeuten.

Gegenstand der Erfindung ist auch ein Verfahren zur Herstellung eines Naphtholderivates wie es vorstehend charakterisiert ist. Das Verfahren ist dadurch gekennzeichnet, daß

a) ein Naphthochinon der allgemeinen Formel II

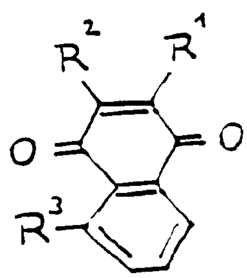

(II)

in der

$R^1$, $R^2$, $R^3$ gleich oder verschieden sind und jeweils Wasserstoff, eine Alkyl- oder Alkoxygruppe darstellen, wobei mindestens einer der Reste ein ($C_8$-$C_{30}$)-Alkyl- oder Alkoxyrest ist,

mit einem Hydrazin der allgemeinen Formel III

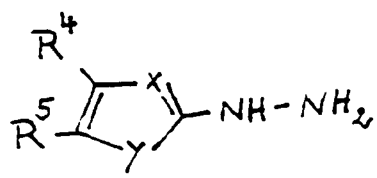

(III)

in der

$R^4$ Wasserstoff oder eine Alkylgruppe,

$R^5$ eine Nitrogruppe, eine durch Halogen substituierte Alkylgruppe, eine Cyanogruppe, eine Sulfonamidgruppe oder eine Alkylsulfonylgruppe,

X Stickstoff oder den Rest $CR^6$ und

Y Schwefel oder den Rest $CR^7 = CR^8$,

wobei $R^6$, $R^7$, $R^8$ gleich oder verschieden sind und jeweils Wasserstoff, Halogen, eine Nitrogruppe, eine Cyanogruppe, eine Alkyl- oder durch Halogen substituierte Alkylgruppe oder eine Alkylsulfonylgruppe

bedeuten, umgesetzt wird oder

b) ein Amin der allgemeinen Formel IV

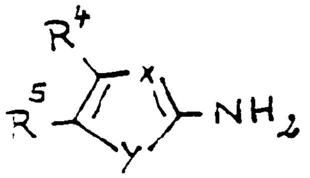

(IV)

in der

$R^4$, $R^5$, X und Y die vorstehend unter a) angegebene Bedeutung haben

in das entsprechende Diazoniumsalz überführt wird und

mit einem Naphthol der allgemeinen Formel V

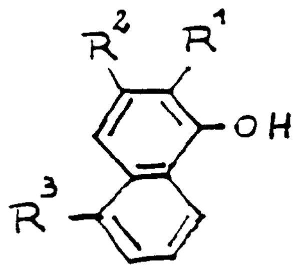

(V)

in der

$R^1$, $R^2$ und $R^3$ die vorstehend unter a) angegebene Bedeutung haben

in einer Azokupplungsreaktion umgesetzt wird.

Weiter ist Gegenstand der Erfindung die Verwendung eines Naphtholderivates wie es vorstehend charakterisiert wurde als pH-Indikator.

Außerdem ist Gegenstand der Erfindung ein Verfahren zur Bestimmung eines Ions in einer wässrigen Flüssigkeit, wobei das Ion in eine mit der wässrigen Flüssigkeit nicht mischbare Phase gelangt und ein dort anwesender pH-Indikator dadurch eine Farbänderung erfährt, welche zur Bestimmung des Ions herangezogen wird, das dadurch gekennzeichnet ist, daß als pH-Indikator ein Naphtholderivat der vorstehend genannten Art eingesetzt wird.

Schließlich ist Gegenstand der Erfindung ein Mittel zur Bestimmung eines Ions in einer wässrigen Flüssigkeit, enthaltend einen Ionophor und einen pH-Indikator, das dadurch gekennzeichnet ist, daß der pH-Indikator ein Naphtholderivat ist, wie es vorstehend charakterisiert ist.

Gegenstand der Erfindung ist damit auch die Verwendung eines wie vorstehend charakterisierten Naphtholderivates zur Herstellung eines Mittels zur Bestimmung eines Ions.

Es wurde gefunden, daß Verbindungen der allgemeinen Formel I in der Bedeutung wie vorstehend ausgeführt pH-Indikatoren sind, die die gestellte Aufgabe lösen.

Unter einer Alkylgruppe in der Definition der Reste $R^1$, $R^2$, $R^3$, $R^4$, $R^6$, $R^7$ und $R^8$ wird ein Alkylrest mit 1 bis 30 Kohlenstoffatome aufweisender Alkylrest verstanden. Insbesondere für die Reste $R^4$, $R^6$, $R^7$ und $R^8$ sind Alkylreste mit 1 bis 4 Kohlenstoffatomen, insbesondere 1 bis 2 Kohlenstoffatome, bevorzugt. Was die Reste $R^1$, $R^2$ und $R^3$ anbelangt, so ist vorzugsweise nur einer der Reste ein Alkylrest mit 8 bis 30, vorzugsweise 10 bis 20 Kohlenstoffatomen. Sollten die übrigen Reste dieser Gruppe ebenfalls eine Alkylgruppe darstellen, so sind sie vorzugsweise ein Alkylrest mit 1 bis 4, vorzugsweise 1 bis 2 Kohlenstoffatomen. Alkylreste mit mehr als 2 Kohlenstoffatomen können geradkettig oder verzweigt sein. Außerdem kann der Alkylrest auch teilweise ungesättigt sein.

Unter einer durch Halogen substituierten Alkylgruppe in der Definition von $R^5$, $R^6$, $R^7$ und $R^8$ wird ein durch Fluor, Chlor, Brom oder Jod substituierter Alkylrest mit 1 bis 4 Kohlenstoffatomen verstanden. Bevorzugt sind durch Fluor substituierte Alkylreste mit 1 bis 2 Kohlenstoffatomen. Besonders bevorzugt ist der Trifluormethylrest.

Eine Alkoxygruppe in der Definition der Reste $R^1$, $R^2$, $R^3$ ist ein Alkoxyrest mit 8 bis 30, vorzugsweise 10 bis 20 Kohlenstoffatomen. Der Alkoxyrest kann geradkettig oder verzweigt, gesättigt oder teilweise ungesättigt sein.

Halogen in der Definition der Reste $R^6$, $R^7$, $R^8$ kann Fluor, Chlor, Brom oder Jod bedeuten, bevorzugt sind

Chlor und Brom.

Eine Alkylsulfonylgruppe in der Definition der Reste $R^5$, $R^6$, $R^7$, $R^8$ bedeutet die Gruppierung Alkyl-$SO_2$-. In diesem Zusammenhang stellt die Alkylgruppe einen Alkylrest aus 1 bis 4, vorzugsweise 1 bis 2 Kohlenstoffatomen dar. Besonders bevorzugt ist die Methylsulfonylgruppe.

Unter einer Sulfonamidgruppe in der Definition des Restes $R^5$ wird ein unsubstituiertes Amid ($-SO_2NH_2$) oder ein Amid eines primären oder sekundären Amins ($-SO_2$ NHR oder $-SO_2$ $NR_2$) verstanden. Substituenten des Amids (R) können Alkyl, Aryl oder Aralkylreste sein. Im Falle des Amids eines sekundären Amins können die Substituenten (R) gleich oder verschieden sein. Unter einem Alkylrest wird in diesem Zusammenhang ein Rest mit 1 bis 4 Kohlenstoffatomen verstanden. Ein Arylrest bedeutet einen aromatischen Rest mit 6 bis 10 Kohlenstoffatomen. Bevorzugte Arylreste sind der Phenyl- oder Naphthylrest. Aralkylreste sind solche Reste, in denen der Arylteil ein aromatischer Rest mit 6 bis 10 Kohlenstoffatomen und der Alkylteil ein Rest mit 1 bis 4 Kohlenstoffatomen ist. Bevorzugter Aralkylrest ist der Benzylrest. Für die vorliegende Erfindung ist die unsubstituierte Sulfonamidgruppe ($-SO_2NH_2$) besonders bevorzugt.

Besonders bevorzugte Naphtholderivate im Sinne der vorliegenden Erfindung sind solche, bei denen einer der Reste $R^1$, $R^2$ und $R^3$ einen Alkyl- oder Alkoxyrest mit 8 bis 30, vorzugsweise 10 bis 20 Kohlenstoffatomen darstellt und die übrigen Reste aus der vorgenannten Gruppe Wasserstoff oder einen Alkylrest mit 1 bis 4, vorzugsweise 1 bis 2 Kohlenstoffatomen bedeuten.

Ganz besonders bevorzugte Naphtholderivate sind solche, in denen $R^1$ eine Alkoxygruppe mit 10 bis 20 Kohlenstoffatomen, $R^2$ und $R^3$ Wasserstoff darstellen und die übrigen Reste die für Formel I angegebene Bedeutung haben.

Die Verbindungen der allgemeinen Formel I sind neu. Sie können nach an sich bekannten Verfahren analog hergestellt werden. Zur Herstellung von Naphtholderivaten der allgemeinen Formel I sind mehrere Verfahrensvarianten möglich. Zum einen können Naphthochinone der allgemeinen Formel II

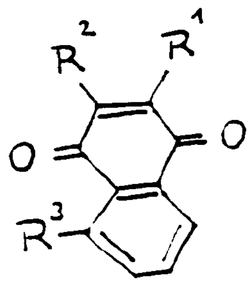

(II)

in der
$R^1$, $R^2$ und $R^3$ die für die allgemeine Formel I angegebene Bedeutung haben, mit einem Hydrazin der allgemeinen Formel III

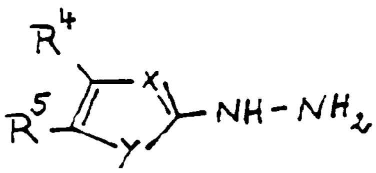

(III)

in der $R^4$, $R^5$, X und Y die für die allgemeine Formel I angegebene Bedeutung haben umgesetzt werden. Diese Umsetzung kann unter de für die Bildung eines Hydrazons üblichen Bedingungen erfolgen.

Vorzugsweise erfolgt die Reaktion unter sauren Bedingungen. Das Hydrazon selbst ist nicht beständig, sondern lagert sich zu dem gewünschten Naphthol der allgemeinen Formel I um.

Ein anderer Weg zur Herstellung der erfindungsgemäßen Naphtholderivate der allgemeinen Formel I geht aus von Aminen der allgemeinen Formel IV

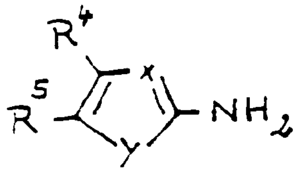

(IV)

in der $R^4$, $R^5$, X und Y die für die Formel I angegebene Bedeutung haben. Diese Amine werden diazotiert und die resultierenden Diazoniumsalze mit einem Naphthol der allgemeinen Formel V

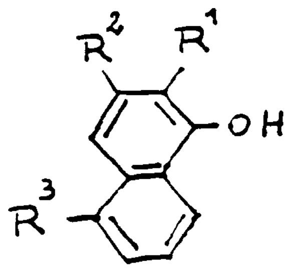

(V)

in der $R^1$, $R^2$ und $R^3$ die für die allgemeine Formel I angegebene Bedeutung haben, in einer Azokupplungsreaktion umgesetzt.

Die Diazotierung der Amine der allgemeinen Formel IV kann in der üblichen Weise erfolgen. Als vorteilhaft erwiesen hat es sich, konzentrierte Mineralsäure, beispielsweise konzentrierte Schwefelsäure mit einem Nitrit, vorzugsweise Natriumnitrit vorzulegen und unter Kühlung auf Raumtemperatur das Amin der allgemeinen Formel IV zuzugeben. Als ganz besonders vorteilhaft hat sich eine Diazotierungsmischung erwiesen, die Natriumnitrit und neben konzentrierter Schwefelsäure auch Eisessig enthält. Das bevorzugte Volumenverhältnis von Schwefelsäure und Eisessig liegt zwischen 1:1 und 2:1. Üblicherweise ist das Verhältnis von Nitrit und zu diazotierendem Amin der allgemeinen Formel IV äquimolar.

Nach beendeter Diazotierungsreaktion wird die Reaktionsmischung wässrig aufgearbeitet. Vorteilhafterweise gießt man hierzu die Reaktionsmischung auf Eiswasser. Das Diazoniumsalz selbst wird nicht isoliert, sondern in der wässrigen Aufarbeitungslösung mit dem Naphthol der allgemeinen Formel V zur Azokupplung gebracht. Diese erfolgt vorzugsweise unter schwach sauren Bedingungen. Naphthole der allgemeinen Formel V sind in wässrigen Lösungen nur sehr schwer löslich. Sie werden deshalb in organischen Lösungsmitteln zum Einsatz gebracht. Als organisches Lösungsmittel ist beispielsweise Chloroform gut geeignet. So kann eine nach wässriger Aufarbeitung vorliegende Diazoniumsalzlösung zu einer Lösung eines Naphthols der allgemeinen Formel V in Chloroform und Eisessig und Zugabe eines Acetats zur Abpufferung des pH-Wertes des Reaktionsmediums hinzugefügt werden. Meist fallen die gebildeten Naphtholderivate der allgemeinen Formel I aus der Reaktionsmischung aus. Das Produkt kann dann umkristallisiert oder chromatographisch aufgereinigt werden.

Die erfindungsgemäßen Naphtholderivate der allgemeinen Formel I sind sehr gut dazu geeignet, Änderungen der Wasserstoffionenkonzentration in einer Lösung durch eine Farbänderung anzuzeigen. Die Verbindungen sind in wässrigen Lösungen nur schlecht, umso besser aber in organischen Lösungsmitteln löslich. Sie sind hydrolysestabil und unempfindlich gegenüber reduzierend wirkenden Stoffen, wie beispielsweise Ascorbinsäure. Die erfindungsgemäßen Substanzen lassen sich problemlos handhaben und sind insbesondere in fertigen Testzubereitungen so stabil, daß sie gut darin gelagert werden können.

Die pH-Indikatoren erlauben außerdem sehr empfindliche Messungen, da sie einen großen Wellenlängen-Shift, d. h. eine Verschiebung der Wellenlänge maximaler Absorption aufweisen. Aufgrund ihrer Eigenschaften eignen sie sich sehr gut zum Einsatz in Verfahren zur Bestimmung eines Ions in einer wässrigen Flüssigkeit, insbesondere nach dem Prinzip der "heterogenen pH-Reaktion" wie es eingangs beschrieben worden ist. Die erfindungsgemäßen Naphtholderivate der allgemeinen Formel I können hierzu sowohl in Flüssig-Flüssig-Extraktionen, wie sie grundsätzlich bei E.S. Hyman, Biophysical Society Abstracts, 1971, 72a beschrieben sind, eingesetzt werden, als auch auf "trockenchemischen" Testträgern, die nach dem Prinzip der heterogenen pH-Reaktion arbeiten. Verfahren zur Bestimmung eines Ions in einer wässrigen Flüssigkeit, die nach dem Prinzip der heterogenen pH-Reaktion ablaufen, ist es gemeinsam, daß das zu bestimmende Ion aus der wässrigen Probenflüssigkeit in eine mit der wässrigen Flüssigkeit nicht mischbare Phase gelangt und ein dort anwesender pH-Indikator dadurch eine Farbänderung erfährt, welche zur Bestimmung des Ions herangezogen wird. Für solche Verfahren sind Naphtholderivate der allgemeinen Formel I, insbesondere die dort als besonders bevorzugt genannten Verbindungen, sehr gut geeignet.

Ein erfindungsgemäßes Mittel zur Bestimmung eines Ions in einer wässrigen Flüssigkeit enthält in einem organischen Medium, das mit Wasser nicht mischbar ist, neben dem in organischem Medium löslichen pH-Indikator einen für den Transport des zu bestimmenden Ions aus der wässrigen Flüssigkeit in die organische Phase verantwortlichen Ionophor. Im folgenden wird in diesem Zusammenhang näher auf "trockenchemische" Testträger zur Bestimmung von Ionen eingegangen. Für den Fachmann ist es jedoch selbstverständlich, daß im Grunde die folgenden Ausführungen analog grundsätzlich auch für Flüssig-Flüssig-Extraktionen und somit nicht-testträgergebundene Testverfahren gelten.

Testträger zur Bestimmung von Ionen, die auf dem Prinzip der heterogenen pH-Reaktion basieren, sind wie einleitend beschrieben, aus dem Stand der Technik bekannt. Sie unterscheiden sich im wesentlichen nur darin wie die organische Phase in einer für Testträger sinnvollen Form realisiert ist. Generell besteht die organische Phase aus schwer flüchtigen, mit Wasser nicht mischbaren organischen Flüssigkeiten und/oder hydrophoben Polymeren. Liegen beide zusammen als feste Lösung vor, so spricht man auch von weichgemachten Kunststoffen.

Die erfindungsgemäßen Naphtholderivate der allgemeinen Formel I können prinzipiell in allen aus dem Stand der Technik bekannten Testträgern zur Bestimmung von Ionen, die auf dem Prinzip der heterogenen pH-Reaktion beruhen, eingesetzt werden. Ganz besonders vorteilhaft haben sie sich jedoch in Testträgern erwiesen, bei denen sie in einer Filmschicht vorliegen, die einen flüssigkeitsfesten Film aus einem hydrophoben Polymer und darin verteilt inerte feste Partikel enthält. Solche Testträger sind in DE-A-40 15 590.0 beschrieben. Beispiele für solche Testträger sind in den Fig. 1 und 2 skizziert.

In den Figuren 1 und 2 sind zwei Testträger räumlich dargestellt, die für die Bestimmung von Ionen in Blut geeignet sind. Sie erlauben, aus Vollblut Serum bzw. Plasma abzutrennen und in der so gewonnenen Flüssigkeit die Bestimmung der interessierenden Ionen durchzuführen. Die Testträger unterscheiden sich im wesentlichen nur durch die Anordnung der Puffersubstanz innerhalb des Testträgers. Im einzelnen sind die Vorrichtungen wie folgt zusammengesetzt:

Fig. 1: Auf einer inerten Trägerfolie (5), beispielsweise einer Kunststoffolie, ist eine Transportschicht (2) befestigt, die zum Transport der Probenflüssigkeit aus der Probenaufgabezone (7) in den Nachweisbereich (8) dient. Als Transportschicht (2) ist prinzipiell jedes Material geeignet, das die zu untersuchende Flüssigkeit aus der Probenaufgabezone (7) in den Nachweisbereich (8) zu transportieren in der Lage ist und sie dabei nicht so verändert, daß die Analyse beeinträchtigt wird. Besonders vorteilhaft ist es, als Transportschicht (2) ein Glasfaservlies einzusetzen. Die Transportschicht (2) teilweise überdeckend ist eine Schicht (3) zur Abtrennung von korpuskulären Bestandteilen aus der Probenflüssigkeit befestigt. Grundsätzlich kann hierfür jedes Material verwendet werden, das erlaubt, korpuskuläre Bestandteile aus der Probenflüssigkeit, insbesondere Blutzellen, vor allem Erythrozyten aus Blut, abzutrennen und diese nicht in wesentlichen Mengen in den Nachweisbereich (8) gelangen zu lassen, so daß sie dort keine Störung der Nachweisreaktion verursachen. Im übrigen darf die Abtrennschicht (3) nicht zu einer Veränderung der Probenflüssigkeit dahingehend führen, daß darin die Konzentration der bestimmenden Ionen verändert und so das Ergebnis verfälscht wird. Als besonders geeignet für die Abtrennschicht (3) haben sich Glasfaservliese erwiesen, wie sie z. B. in EP-B-0 045 476 beschrieben sind. Über der Abtrennschicht (3) ist eine Schutzschicht (4) angebracht, die verhindern soll, daß bei der Probenaufgabe, beispielsweise mittels einer Pipette, die Abtrennschicht (3) beschädigt wird. Bewährt hat sich hierfür ein Netz aus inertem Material, beispielsweise aus Kunststoff. Schutzschicht (4) und Abtrennschicht (3) sind auf der inerten Trägerfolie (5) befestigt. Dies kann beispielsweise mittels eines Schmelzkleberstreifens (6) erfolgen. Seitlich von der Transportschicht (2) ist eine aus durchsichtigem Kunststoff bestehende Trägerfolie mit einer Filmschicht (1), die die zur Durchführung der Bestimmung notwendigen Reagenzien (auch ein erfindungsgemäßes Naphtholderivat als pH-Indikator) enthält, befestigt. Vorteilhafterweise geschieht dies über eine Klebestelle (9), beispielsweise einen Schmelzkleberstreifen. Die Filmschicht (1) ist so angeordnet, daß sie beim Niederdrücken der durchsichtigen Trägerfolie in Richtung der inerten Trägerfolie (5) mit der Transportschicht (2) in einen einen Flüssigkeitsübergang ermöglichenden Kontakt gebracht werden kann.

Die Filmschicht (1) enthält einen flüssigkeitsfesten Film aus einem hydrophoben Polymer und darin verteilten Partikeln. Das hydrophobe Polymer ist für die zu untersuchende Flüssigkeit und auch für zu bestimmende Ionen nicht durchlässig. Es sind die Partikel, die ein Eindringen der Probenflüssigkeit in die Filmschicht ermöglichen. Die Filmschicht (1) insgesamt ist für die zu untersuchende Flüssigkeit nicht durchlässig. Es wird lediglich ein bestimmtes Volumen aufgenommen. Als vorteilhaft einsetzbare hydrophobe Polymere haben sich insbesondere Copolymere des Vinylacetates erwiesen. Besonders vorteilhaft sind Copolymere des Vinylacetats mit Vinyllaurat oder Maleinsäuredibutylester.

Als Partikel können feste, in den zu untersuchenden Flüssigkeiten unlösliche, inerte, anorganische oder organische Partikel eingesetzt werden, die eine Ölzahl von 80 - 200, vorzugsweise 100 - 170 aufweisen. Vor allem haben sich die verschiedenen Arten von Diatomeenerde, wie ungeglühte oder Naturkieselgur, calcinierte

oder gebrannte Kieselgur, flußgeglühte oder aktivierte Kieselgur als vorteilhaft für die Filmschicht (1) erwiesen.

Die Ölzahl ist eine aus dem Gebiet der Lacke und Beschichtungen bekannte Kenngröße für Teilchen, die beispielsweise als Füllstoffe eingesetzt werden. Sie ist ein Maß für die Wechselwirkung zwischen den Teilchen und dem Medium, in dem sie dispergiert werden. Die Ölzahl ist einfach zu ermitteln. Die Bestimmung erfolgt nach DIN 53199. Nach dieser Norm gibt die Ölzahl die Menge Leinöl in g an, die gebraucht wird, um 100 g der interessierenden Partikel zu einer zusammenhängenden kittartigen Masse zu verarbeiten.

Die eingesetzten Teilchen haben in der Regel eine ungleichmäßige Gestalt. Ihre Korngröße liegt üblicherweise zwischen 0,1 und 200 μm, vorzugsweise zwischen 0,2 und 30 μm. Insbesondere zeichnen sich die erfindungsgemäßen Partikel dadurch aus, daß sie Hohlräume aufweisen, in die Gase und benetzende Flüssigkeiten eindringen können. Diese Eigenschaft drückt sich insbesondere in dem niedrigen Schüttgewicht von 50 bis 250, vorzugsweise 80 bis 180 g/l aus.

Für die Filmschicht (1) ist ein Gewichtsverhältnis von hydrophobem Polymer zu Partikel von 5:1 bis 1:10 brauchbar. Vorteilhafterweise beträgt das Gewichtsverhältnis 1:1 bis 1:3. In jedem Fall ist das optimale Gewichtsverhältnis von hydrophobem Polymer zu Partikel von der Natur des eingesetzten Polymers und der Teilchen abhängig. Ist das hydrophobe Polymer ein Copolymer des Vinylacetats mit Vinyllaurat oder Maleinsäuredibutylester und die Teilchen Diatomeenerde liegt das optimale Gewichtsverhältnis zwischen 1:1,5 und 1:2,5.

Weitere notwendige Bestandteile der Filmschicht (1) sind eine schwer flüchtige mit Wasser nicht mischbare Flüssigkeit, ein Ionophor und ein erfindungsgemäßes Naphtholderivat. Diese Komponenten liegen in homogener Verteilung in dem hydrophoben Polymer vor.

Unter einer schwer flüchtigen, mit Wasser nicht mischbaren Flüssigkeit wird ein Weichmacher für Kunststoffe verstanden. Er dient zusammen mit dem Polymer als eigentliche organische Phase für das Ionenbestimmungsverfahren gemäß dem Prinzip der heterogenen pH-Reaktion. Es kommen alle möglichen handelsüblichen Typen für Kunststoffweichmacher, vorzugsweise Sebacinsäure-, Acrylsäure, Phthalsäure- und Phosphorsäure-Ester sowie Silicone in Frage. Insbesondere aus verarbeitungstechnischen Gründen wird dem sehr schwer flüchtigen Uvinul®N539 (2,2-Diphenyl-1-cyano-acrylsäure-ethylhexylester) der Vorzug gegeben.

Das Gewichtsverhältnis von hydrophobem Polymer zu schwer flüchtiger, hydrophober organischer Flüssigkeit in der Testschicht kann zwischen etwa 5:1 bis etwa 1:5, insbesondere etwa 2:1 bis etwa 1:2 betragen.

Als Ionophore sind alle die Ionen komplexierenden Substanzen verwendbar, die für die zu bestimmenden Ionen spezifisch und hinreichend löslich in nicht wässriger Phase sind. Hierbei ist insbesondere an Kronenäther, Kryptanden, Podanden und entsprechende Peptide cyclischer oder acylischer Natur zu denken. Für die Bestimmung von Kalium hat sich 2,3-Naphtho-15-Krone-5 als vorteilhaft erwiesen. Ganz besonders bevorzugt ist das Naturstoffionophor Valinomycin. Für die Bestimmung von Natrium kommen beispielsweise N,N'-Dibenzyl-N,N'-diphenyl-1,2-phenylendioxydiacetamid, für Lithium N,N'-Diheptyl-5,5-dimethyl-N,N'-di(3-oxapentyl)-3,7-dioxanonandiamid und für Calcium Diethyl-N,N'[(4R,5R)-4,5-dimethyl-1,8-dioxo-3,6-dioxa-octamethylen]-bis-(12-methylaminododecanoat) in Frage.

Aufgrund des Einsatzes von erfindungsgemäßen Naphtholderivaten als pH-Indikatoren und deren Empfindlichkeit gegen pH-Änderungen ist es besonders vorteilhaft, in die Filmschicht (1) auch einen Puffer einzubringen. Der pH-Wert eines Puffers regelt bei Bestimmungsverfahren für Ionen, die auf dem Prinzip der heterogenen pH-Reaktion beruhen, den Übertritt des Protons aus der nicht-wässrigen in die wässrige Phase. Vorzugsweise wählt man bei diagnostischen Mitteln für die Bestimmung von Ionen in Körperflüssigkeiten die Puffersubstanz so, daß ein pH-Wert zwischen 5 - 10, vorzugsweise 7 bis 8, eingestellt werden kann. Hierfür kommen prinzipiell alle hierfür üblichen Puffer in Frage, sofern sie wasserlöslich sind und keine Ionen enthalten, die die Bestimmungsreaktion stören. Bewährt haben sich Puffer aus der Reihe der sogenannten Good-Puffer, wie z. B. N,N-Bis-(hydroxyethyl)-aminoethansulfonsäure (BES), 3-[N-Trishydroxymethyl]-methylamino-hydroxypropansulfonsäure (TAPSO), oder N-Hydroxyethylpiperazin-N-propansulfonsäure (HEPPS).

Werden Ionophore verwendet, die nicht genügend selektiv für das zu bestimmende Ion sind, so können wasserlösliche Komplexbildner zugesetzt werden, die störende Ionen maskieren. So wird z. B. eine etwaige Störung eines Natriumtestes durch Calcium mit Ethylendiamintetraacetat (EDTA) verhindert.

Weiter können zur Verbesserung der Filmherstellung oder der Filmbenetzung durch die zu untersuchende Probe Netzmittel eingesetzt werden. Hierzu sind nur solche verwendbar, die die Nachweisreaktion nicht stören. Dies sind insbesondere nichtionische und zwitterionische Verbindungen. Von den nichtionischen Netzmitteln haben sich beispielsweise Polyethylenglykolether oder -ester, vorzugsweise Triton® X100 als vorteilhaft erwiesen. Als zwitterionisches Netzmittel kann vorteilhafterweise n-Decyl-N,N-dimethyl-3-ammonio-1-propansulfonat (Zwittergent®3-10) eingesetzt werden.

Zur Verbesserung der Konsistenz der Filmschicht (1) können zusätzlich auch Verdicker eingesetzt werden. Als besonders vorteilhaft hat sich hier Ethylcellulose erwiesen. Für die nach der Benetzung der Filmschicht (1) mit einer zu analysierenden wässrigen Flüssigkeit vorliegende wässrige Phase kann der Filmschicht (1)

auch noch zusätzlich hydrophiles Verdickungsmittel, wie beispielsweise Hydroxyethyl- oder Hydroxypropylcellulose zugegeben werden.

Zur Herstellung einer Filmschicht (1) werden alle Komponenten, die bei einem Einsatz der Filmschicht zur Bestimmung eines Ions in einer wässrigen Flüssigkeit, insbesondere einer Körperflüssigkeit, wie Blut, Plasma, Serum oder Urin, nicht in die wässrige Phase aufgenommen werden, sondern in der organischen Phase, d. h. der Filmschicht bleiben (hydrophobes Polymer; schwer flüchtige, mit Wasser nicht mischbare Flüssigkeit; Ionophor; erfindungsgemäßes Naphtholderivat; gegebenenfalls Verdicker zur Verbesserung der Konsistenz der Filmschicht) in einem leicht- bis mittelflüchtigen organischen Lösungsmittel gelöst. In diese Lösung werden die Partikel eingerührt und darin homogen verteilt. Die Masse wird danach auf einer Unterlage mit einem Rakel ausgestrichen und getrocknet. Es können naturgemäß auch andere geeignete Auftragsverfahren, wie Walzenauftrag, Filmgießen oder ähnliche angewendet werden. Die trockene Filmschicht hat eine Dicke von 20 bis 500, vorzugsweise von 20 bis 150 µm.

Zur Einbringung von Bestandteilen, die bei Aufgabe der wässrigen Probenflüssigkeit auf die Filmschicht (1) in die wässrige Phase aufgenommen werden (Puffer; gegebenenfalls Komplexbildner; gegebenenfalls Netzmittel; gegebenenfalls Verdicker zur Veränderung der Konsistenz der wässrigen Phase) gibt es verschiedene Wege. Eine Möglichkeit ist es, die Partikel mit den genannten Komponenten zu belegen, indem man die Teilchen zusammen mit einer wässrigen Lösung der Komponenten eindampft, sprühtrocknet oder gefriertrocknet. Die so belegten Partikel werden dann wie oben beschrieben in die organische Lösung eingerührt. Eine andere Möglichkeit besteht darin, die Filmschicht erst mit unbehandelten Partikeln herzustellen, dann mit einer wässrigen Lösung der vorstehend genannten Bestandteile nachzubeschichten und abschließend zu trocknen.

Fig. 2 unterscheidet sich von Fig. 1 darin, daß ebenfalls über die Klebestelle (9), beispielsweise einen Schmelzkleberstreifen, zwischen Filmschicht (10) und Transportschicht (2) eine Schicht (11) angebracht ist, die solche Substanzen enthält, die während der Bestimmungsreaktion in die wässrige Phase aufgenommen werden. Solche Substanzen sind insbesondere Puffersubstanzen. Aber auch Komplexbildner, Netzmittel oder Verdicker zur Veränderung der Konsistenz der wässrigen Phase können statt in der Filmschicht (1) des Testträgers gemäß Fig. 1 oder (10) des Testträgers gemäß Fig. 2 in der zusätzlichen Schicht (11) des Testträgers gemäß Fig. 2 untergebracht sein. Als Material für die zusätzliche Schicht (11) kommen saugfähige Materialien in Frage, die einen Flüssigkeitsübergang auf eine weitere Schicht ermöglichen, wenn diese in Kontakt mit ihr gebracht wird. Besonders vorteilhaft ist Papier einsetzbar, aber auch Netze aus inertem Material, wie Kunststoff sind möglich.

Zur Durchführung der Bestimmung eines Ions in Blut mittels eines der in den Figuren dargestellten Testträgers wird die Probe auf die Schutzschicht (4) gegeben. Das Blut dringt in die Abtrennschicht (3) ein und Erythrozyten werden von Plasma bzw. Serum getrennt. Durch Kapillarkräfte wird die so gewonnene Flüssigkeit in die Nachweiszone (8) gesaugt. Durch Druck auf die Trägerfolie mit der Filmschicht (1) bzw. (10) wird die wässrige Phase in der Transportschicht (2) mit der Filmschicht in Kontakt gebracht, Flüssigkeit dringt in die Filmschicht ein und die Bestimmungsreaktion wird ausgelöst. Die Reaktion wird anhand der Verfärbung in der Filmschicht durch die Trägerfolie der Filmschicht (1) bzw. (10) hindurch visuell beobachtet oder reflexionsphotometrisch gemessen.

Die folgende Tabelle 1 gibt die vorteilhaften und bevorzugten Gewichtsprozente der Bestandteile einer Filmschicht (1) bzw. (10) an:

Tabelle 1:

| Bestandteil der Filmschicht | Gehalt der Filmschicht in Gew.-% | |
|---|---|---|
| | vorteilhaft | bevorzugt |
| Polymer | 5 - 60 | 20 - 40 |
| schwerflüchtige, mit Wasser nicht mischbare Flüssigkeit | 5 - 70 | 20 - 40 |
| Partikel | 15 - 80 | 30 - 50 |
| Ionophor | 0,05 - 5,0 | 0,2 - 1,0 |
| erfindungsgemäßes Naphtholderivat | 0,05 - 5,0 | 0,2 - 0,7 |

Ist Puffersubstanz in oder auf die Filmschicht (1) gebracht, so enthält diese 5 - 30, vorzugsweise 10 - 20 Gew.-% Puffer. Die gegebenenfalls einsetzbaren Substanzen, wie Komplexbildner, Netzmittel oder Verdicker, liegen - falls sie in die Filmschicht (1) ein- oder aufgebracht worden sind - in Mengen von 0,005 bis 5, vorzugsweise 0,02 bis 2 Gew.-% der erfindungsgemäßen Filmschicht vor.

In den folgenden Beispielen wird die Erfindung weiter erläutert.

Beispiel 1

a) 2-(3,7,11,15-Tetramethyl-2-hexadecenyl)-3-methyl-4-[(2,4-dinitrophenyl)azo]-1-naphthol

In einem 2 l Dreihalskolben mit Rührer, Kühler und Thermometer suspendiert man 19,8 g (0.1 mol) 2,4-Dinitrophenylhydrazin in 400 ml Ethanol unter Zugabe von 9 ml (0,11 mol) konz. Salzsäure und gibt 45 g (0,1 mol) Vitamin $K_1$ [2-Methyl-3-(3,7,11,15-tetramethyl-2-hexadecenyl)-1,4-naphthochinon] zu, rührt 15 Minuten bei Raumtemperatur, dann erhitzt man 4 Stunden unter Rückfluß. Danach wird im Vakuum eingeengt. Man erhält 64 g rotbraune viskose Masse. Diese wird an einer Kieselgel-60-(Merck)-säule, innerer Durchmesser 10,5 cm, Füllhöhe 110 cm mit Methylenchlorid/n-Heptan = 2:1 als Laufmittel chromatographisch gereinigt. Wegen der Schwerlöslichkeit des Reaktionsproduktes wird das Rohprodukt in 350 ml des Laufmittels gelöst, unlösliche Anteile über ein Seitzfilter abfiltriert und auf die Kieselgelsäule aufgetragen. Die einschlägigen Chargen werden vereinigt, im Vakuum eingeengt und das organgefarbene, wachsartige Produkt zweimal aus je 100 ml n-Propanol/Ligroin 1:1 umkristallisiert, der Rückstand 2 mal mit 20 ml n-Propanol/Ligroin 1:1 gewaschen und bis zur Gewichtskonstanz getrocknet. Man erhält 19,41 g (31 % der Theorie) orangefarbene, wachsartige, DC-einheitliche Kristalle, Fp. 110°c. Transmissionsspektren bei saurem bzw. alkalischem pH in o-Nitrophenyloctylether ergeben $\lambda_{max}$-Werte von 440 bzw. 616 nm.

Analog können hergestellt werden:

b) 2-(3,7,11,15-Tetramethyl-2-hexadecenyl)-3-methyl-4-[(4-nitrophenyl)azo]-1-naphthol

DC, Kieselgel 60 (Merck), Laufmittel: Toluol/Methanol = 50:1; $R_f$ = 0,22

aus 4-Nitrophenylhydrazin.

Transmissionsspektren bei saurem bzw. alkalischem pH in o-Nitrophenyloctylether ergeben $\lambda_{max}$-Werte von 455 bzw. 637 nm.

c) 2-(3,7,11,15-Tetramethyl-2-hexadecenyl)-3-methyl-4-[(2-methyl-4-nitrophenyl)azo]-1-naphthol

DC, Kieselgel 60 (Merck), Laufmittel: Methylenchlorid/n-Heptan = 3:1, $R_f$ = 0,31

aus 2-Methyl-4-nitrophenylhydrazin

Transmissionsspektren bei saurem bzw. alkalischem pH in o-Nitrophenyloctylether ergeben $\lambda_{max}$-Werte von 447 bzw. 642 nm.

d) 4-(2-Methyl-2-hydroxy-3-[(3,7,11,15-tetramethyl-2-hexadecenyl)-1-naphthol)azo]-3-nitrobenzonitril

amorph, DC, Kieselgel 60 (Merck), Laufmittel: Methylenchlorid/n-Heptan 2:1, $R_f$ = 0,21
aus 2-Hydrazino-5-nitrobenzonitril (Parnell, Chem. Soc. 1959, 2363)
Transmissionsspektren bei saurem bzw. alkalischem pH in o-Nitrophenyloctylether ergeben $\lambda_{max}$-Werte von 499 bzw. 574 nm.

e) 2-(3,7,11,15-Tetramethyl-2-hexadecenyl)-3-methyl-4-[(4-amino-sulfonyl-2-nitrophenyl)azo]-1-naphthol
Fp. 122°C, DC, Kieselgel 60 (Merck), Laufmittel:
Toluol/Methanol 5:1, $R_f$ = 0,38
aus 4-Amidosulfonyl-2-nitrophenylhydrazin, welches folgendermaßen hergestellt wird:

Man rührt 4,88 g (0,021 Mol) 4-Amidosulfonyl-2-nitrochlorbenzol (erhältlich gemäß P. Fischer, Chem. Ber. 24, 3190 (1891)) mit einer Lösung aus 5,25 ml (0,105 Mol) Hydrazinhydrat in 150 ml Methanol eine halbe Stunde bei Raumtemperatur, saugt die gebildeten orangeroten Kristalle ab, wäscht den Filterrückstand mit wenig Methanol und erhält nach Trocknen über Diphosphorpentoxid 3,64 g (das entspricht 75 % der Theorie) des gewünschten Hydrazinderivats. Fp 217 - 219 °C.

Transmissionsspektren bei saurem bzw. alkalischem pH in o-Nitrophenyloctylether ergeben $\lambda_{max}$-Werte von 450 bzw. 566 nm.

f) 2-(3,7,11,15-Tetramethyl-2-hexadecenyl)-3-methyl-4-[(2,4-di(methansulfonyl)phenyl)azo]-1-naphthol
amorph, DC, Kieselgel 60 (Merck), Laufmittel:
Toluol/Essigsäureethylester 5:1, $R_f$ = 0,23
aus 2,4-Di(methansulfonyl)phenylhydrazin
Transmissionsspektren bei saurem bzw. alkalischem pH in o-Nitrophenyloctylether ergeben $\lambda_{max}$-Werte von 462 bzw. 562 nm.

g) 2-(3,7,11,15-Tetramethyl-2-hexadecenyl)-3-methyl-4-[(2,4,6-trinitrophenyl)azo]-1-naphthol
amorph, DC, Kieselgel 60 (Merck), Laufmittel: Methylenchlorid/n-Heptan 2:1, $R_f$ = 0,55
aus 2,4,6-Trinitrophenylhydrazin
Transmissionsspektren bei saurem bzw. alkalischem pH in o-Nitrophenyloctylether ergeben $\lambda_{max}$-Werte von 495 bzw. 600 nm.

h) 2-(3,7,11,15-Tetramethyl-2-hexadecenyl)-3-methyl-4[(2,6-dinitro-4-cyanophenyl)azo]-1-naphthol
amorph, DC, Kieselgel 60 (Merck), Laufmittel: Methylenchlorid, $R_f$ = 0,62
aus 4-Hydrazino-3,5-dinitrobenzonitril (US-A-3,935,183)
Transmissionsspektren bei saurem bzw. alkalischem pH in o-Nitrophenyloctylether ergeben $\lambda_{max}$-Werte von 440 bzw. 562 nm.

i) 2-(3,7,11,15-Tetramethyl-2-hexadecenyl)-3-methyl-4-[(3,5-dinitro-2-thinyl)azo]-1-naphthol
amorph, DC, Kieselgel 60 (Merck), Laufmittel: Toluol/Methanol 5:1, $R_f$ = 0,28
aus 2-Hydrazino-3,5-dinitrothiophen (H.Beyer et al., J. Prakt. Chem. 296, 91 (1964)

j) 2-(3,7,11,15-Tetramethyl-2-hexadecenyl)-3-methyl-4-[(5-nitro-2-thiazolyl)azo]-1-naphthol
amorph, DC, Kieselgel 60 (Merck), Laufmittel: Toluol/Methanol 5:1, $R_f$ = 0,32
aus 2-Hydrazino-5-nitro-1,3-thiazol (DE-A-23 29 295) Transmissionsspektren bei saurem bzw. alkalischem pH in o-Nitrophenyloctylether ergeben $\lambda_{max}$-Werte von 450 bzw. 652 nm.

## Beispiel 2

### 4-[(2,6-Dibrom-4-nitrophenyl)azo]-2-octadecyloxy-1-naphthol

a) 2-Octadecyloxynaphthalin

Man gibt in einen 4 l-Dreihalskolben mit Rührer, Kühler und Thermometer 172,8 g (1,2 mol) 2-Naphthol (98 %) zu einer Lösung von 48 g (1,2 mol) Natriumhydroxid (99 %) in 1 l Ethanol, fügt nach erfolgter Lösung 417 g (1,25 mol) n-Octadecylbromid hinzu und erhitzt die Reaktionsmischung 14 Stunden unter Rückfluß. Nach Zugabe von weiteren 1 l Ethanol wird die heiße Lösung zur Entfernung anorganischen Materials über ein Seitzfilter abgesaugt und das schwach rosa gefärbte Filtrat durch 30minütiges Einstellen in ein Eisbad zur Kristallisation gebracht. Nach Absaugen der fast farblosen Kristalle wäscht man den Filterkuchen portionsweise mit ca. 700 ml Ethanol und erhält nach Trocknen über Diphosphorpentoxid 371,9 g (93,7 % der Theorie) 2-Octadecyloxynaphthalin, farblose Kristalle, Fp. 64-68°c.
DC: Kieselgel 60 (Merck), Laufmittel: n-Heptan/Methylethylketon 2:1, $R_f$ = 0,34

b) 2-Octadecyloxy-1-naphthol

In einem 10 l-Dreihalskolben mit Rührer, Claisenaufsatz Thermometer und Kühler mit Chlorcalciumrohr gibt man 594 g (1,5 mol) 2-Octadecyloxynaphthalin und 397 g (0,75 mol) Bleitetraacetat in ein Gemisch von 3 l Eisessig und 600 ml Acetanhydrid und erwärmt auf 55°C. Während 4 Tagen werden im Zeitabstand

von 24 Stunden weitere 400 g (jeweils 100 g) Bleitetraacetat portionsweise unter Rühren zugegeben. Danach wird die entstandene gelbe Lösung auf Raumtemperatur abgekühlt, nach Zugabe von 1,5 l Wasser 30 Minuten nachgerührt, der entstandene Kristallbrei abgesaugt und portionsweise mit 2 l Wasser gewaschen. Das feuchte Rohprodukt wird in 4 l Toluol gelöst und dreimal mit je 1 l Wasser, dreimal mit 1 l gesättigter Natriumhydrogencarbonatlösung und dann abermals 3 mal mit 1 l Wasser durchgeschüttelt. Nach Trocknen der Toluolphase über Natriumsulfat, Absaugen und Einengen erhält man 635 g braunes Rohprodukt, das chromatographisch wie folgt gereinigt wird: Man löst das erhaltene Kristallisat in einer Mischung von 1,3 l Toluol/Isohexan 5:2 und gibt die Lösung auf eine Kieselgel 60 (Merck)-säule, innerer Durchmesser 11,5 cm, Füllhöhe 1,2 m. Als Laufmittel verwendet man Toluol/Isohexan 5:2 und schneidet Fraktionen von ca. 300 ml. Die Fraktionen 9-52 werden vereinigt und bis zur Gewichtskonstanz eingeengt. Man erhält 324,2 g 2-Octadecyloxy-1-naphtholacetat, Fp. 67-68°C. Dieses wird ohne weitere Reinigung in 1,8 l Methanol unter Erwärmen gelöst und auf 20°C abgekühlt. Zu der entstandenen Suspension tropft man innerhalb 15 Minuten ohne Kühlung unter Rühren 93 ml konz. Schwefelsäure zu, wobei die Temperatur auf 35°C ansteigt. Anschließend erhitzt man 2 Stunden unter Rückfluß, kühlt dann mit einem Eisbad und rührt 30 Minuten unter Eiskühlung nach. Die gebildeten Kristalle werden abgesaugt, mit 150 ml eiskaltem Methanol gewaschen und bei 35 °C im Trockenschrank über Diphosphorpentoxid getrocknet. Man erhält 294,4 g (47,5 % der Theorie) 2-Octadecyloxy- 1-naphthol, farblose Kristalle, Fp. 58-59°C.

c) 4-[(2,6- Dibrom-4-nitrophenyl)azo]-2-octadecyloxy-1-naphthol

In einem 2 l Dreihalskolben mit Rührer, Claisenaufsatz und Thermometer werden 22,7 g (0,33 mol) Natriumnitrit während 10-15 Minuten unter Rühren in 300 ml konz. Schwefelsäure eingetragen, wobei man die Temperatur der Reaktionslösung auf 35°C ansteigen läßt. Man kühlt danach auf 20°C und tropft in ca. 15-20 Minuten 230 ml Eisessig so zu, daß die Temperatur unter Eiskühlung bei 20-25°C gehalten wird. Danach gibt man 97,6 ml (0,33 mol) 2,6-Dibrom-4-nitroanilin (Riedel de Haen [99 %GC]) portionsweise während 10 Minuten unter gelegentlichem Kühlen zu, wobei die Temperatur auf19-21°C gehalten wird und rührt noch 3 Stunden nach. Danach gießt man auf 3,5 l Eiswasser und gibt die entstandene Diazoniumsalzlösung rasch zu einer Lösung von 124 g (0,3 mol) 2-Octadecyloxy-1-naphthol in einer Mischung von 3 l Eisessig und 300 ml Chloroform unter Zugabe von 180 g (1,33 mol) Natriumacetat-trihydrat. (Bei der Herstellung der Lösung des Naphtholethers ist darauf zu achten, daß nach Eintragen desselben in Eisessig-Chloroform unter Zugabe von Natriumacetat nach einem Temperaturanstieg auf ca. 45°C wieder auf 20°C abgekühlt wird.) Nach 3 Stunden Rühren im Eisbad wird das erzeugte Kristallisat abgesaugt, der Rückstand dreimal mit je 500 ml Wasser gewaschen und im Trockenschrank bei 40°C getrocknet. Das Rohprodukt - 295,5 g hellbraune Kristalle - werden chromatographisch gereinigt. Die Azoverbindung wird in l 1 Toluol/Methylenchlorid 2:5 gelöst auf eine Kieselgel 60 (Merck)-säule mit innerem Durchmesser 11,5 cm, Füllhöhe 1,2 m aufgetragen und mit Toluol/Methylenchlorid 2:5 eluiert. Man schneidet Fraktionen von ca. 70 ml. Die Fraktionen 57-173 werden vereinigt und eingeengt. Man erhält 134,2 g braune Kristalle. Diese werden in 480 ml Toluol bei 80°C gelöst, auf 65°C gekühlt und unter kräftigem Rühren mit 800 ml Isohexan versetzt. Man läßt unter Rühren auf 20°C abkühlen, stellt über Nacht in den Kühlschrank, saugt die gebildeten Kristalle ab und wäscht den Filterköcher 2 mal mit 300 ml eiskaltem Toluol/Isohexan 1:1,3 und anschließend mit 300 ml Isohexan. Anschließend trocknet man im Trockenschrank bei 40°C über Diphosphorpentoxid bis zur Gewichtskonstanz. Man erhält 119,9 g (55,5 % der Theorie) Azoverbindung, hellbraune Kristalle, Fp. 102-103°C

DC, Kieselgel 60 (Merck), Laufmittel: Toluol-Methylenchlorid 2:5, $R_f$ = 0,38

Transmissionsspektren bei saurem bzw. alkalischem pH in o-Nitrophenyloctylether ergeben $\lambda_{max}$-Werte von 454 bzw. 672 nm.

Beispiel 3

Analog Beispiel 2 können die folgenden Substanzen hergestellt werden:

a) 4-[(2-Nitro-4-trifluormethylphenyl)azo]-2-octadecyloxy-1-naphthol, Fp. 95-97 °C,
aus 2-Nitro-4-trifluormethylanilin
Transmissionsspektren bei saurem bzw. alkalischem pH in o-Nitrophenyloctylether ergeben $\lambda_{max}$-Werte von 470 bzw. 604 nm.

b) 4-[(4-Nitro-2-trifluormethylphenyl)azo]-2-octadecyloxy-1-naphthol, Fp. 135-138 °C,
aus 4-Nitro-2-trifluormethylanilin
Transmissionsspektren bei saurem bzw. alkalischem pH in o-Nitrophenyloctylether ergeben $\lambda_{max}$-Werte von 456 bzw. 664 nm.

c) 4-[(2,4-Dinitrophenyl)azo]-2-octadecyloxy-1-naphthol, Fp. 177-178 °C,

aus 2,4-Dinitroanilin
Transmissionsspektren bei saurem bzw. alkalischem pH in Butylacetat ergeben $\lambda_{max}$-Werte von 456 bzw. 632 nm.

d) 4-[(2-Methansulfonyl-4-nitrophenyl)azo]-2-octadecyloxy-1-naphthol, Fp. 117 °C
aus 2-Methansulfonyl-4-nitroanilin

e) 4-[(4-Ethansulfonyl-2-nitrophenyl)azo]-2-octadecyloxy-1-naphthol, Fp. 165 °C
aus 4-Ethansulfonyl-2-nitroanilin

f) 2-[(4-Hydroxy-2-octadecyloxy-1-naphthyl)azo-5-nitrobenzonitril, Fp. 147-149 °C
aus 2-Cyan-4-nitroanilin

g) 4-[2,6-Dichlor-4-methansulfonylphenyl)azo]-2-octadecyloxy-1-naphthol, Fp. 95 °C
aus 2,6-Dichlor-4-methansulfonylanilin (EP-A-0 039 312)

h) 4-[(2-Brom-6-chlor-4-nitrophenyl)azo]-2-octadecyloxy-1-naphthol, Fp. 94-96 °C
aus 2-Brom-6-chlor-4-nitroanilin

i) 4-[(2-chlor-4,6-dinitrophenyl)azo]-2-octadecyloxy-1-naphthol, Fp. 99-102 °C
aus 2-Chlor-4,6-dinitroanilin
Transmissionsspektren bei saurem bzw. alkalischem pH in Butylacetat ergeben $\lambda_{max}$-Werte von 447 bzw. 645 nm.

j) 2-[(4-Hydroxy-2-octadecyloxy-1-naphthyl)azo]-3-brom-5-nitrobenzonitril, Fp. 178-189 °C
aus 2-Brom-6-cyan-4-nitroanilin (US-A-2,300,447)

k) 4-[2,4,6-Trinitrophenyl)azo]-2-octadecyloxy-1-naphthol,
DC, Kieselgel 60 (Merck). Laufmittel: n-Heptan/Methylketon 4:3, $R_f$ = 0,24
aus 2,4,6-Trinitroanilin
Transmissionsspektren bei saurem bzw. alkalischem pH in o-Nitrophenyloctylether ergeben $\lambda_{max}$-Werte von 452 bzw. 594 nm.

l) 2-[(4-Hydroxy-2-octadecyloxy-1-napthyl)azo]-3,5-dinitrobenzonitril, Fp. 122-123 °C
aus 2-Cyan-4,6-dinitroanilin
Transmissionsspektren bei saurem bzw. alkalischem pH in o-Nitrophenyloctylether ergeben $\lambda_{max}$-Werte von 448 bzw. 602 nm.

m) 2-[(4-Hydroxy-2-octadecyloxy-1-naphthyl)azo]-5-nitro-1,3-benzodinitril, Fp. 160-163 °C
aus 2,6-Dicyan-4-nitroanilin (DE-A-2137719)
Transmissionsspektren bei saurem bzw. alkalischem pH in o-Nitrophenyloctylether ergeben $\lambda_{max}$-Werte von 502 bzw. 609 nm.

n) 4-[(2,6-Dibrom-4-methansulfonylphenyl)azo]-2-octadecyloxy-1-naphthol, Fp. 99-102 °C
aus 2,6-Dibrom-4-methansulfonylanilin (EP-A-0 039 312)
Transmissionsspektren bei saurem bzw. alkalischem pH in o-Nitrophenyloctylether ergeben $\lambda_{max}$-Werte von 442 bzw. 608 nm.

o) 4-[(2-Brom-6-methansulfonyl-4-nitrophenyl)azo]-2-octadecyloxy-1-naphthol, Fp. 210 °C
aus 2-Brom-6-methansulfonyl-4-nitroanilin (DE-A-2516032)

p) 4-[(2-Brom-4-nitro-6-trifluormethylphenyl)-azo]-2-octadecyloxy-1-naphthol, Fp. 84 °C
aus 2-Brom-4-nitro-6-trifluormethylanilin, (M. Hauptschein et al., J. Amer. Chem. Soc. 76, 1051 (1954))
Transmissionsspektren bei saurem bzw. alkalischem pH in o-Nitrophenyloctylether ergeben $\lambda_{max}$-Werte von 448 bzw. 648 nm.

q) 4-[(2-Brom-6-nitro-4-trifluormethylphenyl)azo]-2-octadecyloxy-1-naphthol, Fp. 90-92 °C
aus 2-Brom-6-nitro-4-trifluormethylanilin (FR-A-2608898)
Transmissionsspektren bei saurem bzw. alkalischem pH in o-Nitrophenyloctylether ergeben $\lambda_{max}$-Werte von 486 bzw. 600 nm.

r) 4-[(2,5-Dichlor-4-nitrophenyl)azo]-2-octadecyloxy-1-naphthol, Fp. 95 °C
aus 2,5-Dichlor-4-nitroanilin

u) 4-[(3,5-Dinitro-2-thionyl)azo]-2-octadecyloxy-1-naphthol, Fp. 123-125 °C
aus 2-Amino-3,5-dinitrothiophen (JP 59-98081)
Transmissionsspektren bei saurem bzw. alkalischem pH in o-Nitrophenyloctylether ergeben $\lambda_{max}$-Werte von 566 bzw. 624 nm.

v) 4-[(3,5-Dicyan-4-methyl-2-thiophenyl)azo]-2-octadecyloxy-1-naphthol, Fp. 122-124 °C
aus 2-Amino-3,5-dicyan-4-methylthiophen (DE-A-2359008)
Transmissionsspektren bei saurem bzw. alkalischem pH in o-Nitrophenyloctylether ergeben $\lambda_{max}$-Werte von 453 bzw. 620 nm.

w) 4-[(5-Nitro-2-thiazolyl)azo]-2-octadecyloxy-1-naphthol, Fp. 105 °C
aus 2-Amino-5-nitro-1,3-thiazol

Transmissionsspektren bei saurem bzw. alkalischem pH in o-Nitrophenyloctylether ergeben $\lambda_{max}$-Werte von 459 bzw. 642 nm.

Beispiel 4

4-[(2-Cyan-4-nitrophenyl)azo]-2-decyloxy-1-naphthol

2-Decyloxy-1-naphthol wird analog Beispielen 2 a) und b) über 2-Decyloxynaphthalin hergestellt. Nach säulenchromatographischer Reinigung an Kieselgel 60 (Merck) mit Ligroin/Toluol 2:1 erhält man 32 % gelbliches Öl, $R_f$ = 0,45.

Hiermit wird 4-[(2-Cyan-4-nitrophenyl)azo]-2-decyloxy-1-naphthol mit 2-Cyan-4-nitroanilin analog Beispiel 2 c) hergestellt. Nach Aufreinigung des Rohprodukts an Kieselgel 60 (Merck) mit Methylen chlorid und Methylenchlorid/Methanol 197:3 erhält man 25,6 % Produkt als orangefarbene Kristalle, Fp. 172-175 °C. Transmissionsspektren bei saurem bzw. alkalischem pH in o-Nitrophenyloctylether ergeben $\lambda_{max}$-Werte von 554 bzw. 632 nm.

Beispiel 5

Analog Beispiel 4 können folgende Substanzen hergestellt werden:

a) 4-[(2,6-Dibrom-4-nitrophenyl)azo]-2-decyloxy-1-naphthol, Fp. 93-95°C
aus 2,6-Dibrom-4-nitroanilin
Transmissionsspektren bei saurem bzw. alkalischem pH in o-Nitrophenyloctylether ergeben $\lambda_{max}$-Werte von 454 bzw. 672 nm.

b) 4-(2-Brom-6-cyan-4-nitrophenyl)azo]-2-decyloxy-1-naphthol Fp. 172-175°C
aus 2-Brom-6-cyan-4-nitroanilin

c) 4-[(2,4,6-Trinitrophenyl)azo]-2-decyloxy-1-naphthol, Fp. 165-167°C
aus 2,4,6-Trinitroanilin
Transmissionsspektren bei saurem bzw. alkalischem pH in o-Nitrophenyloctylether ergeben $\lambda_{max}$-Werte von 448 bzw. 594 nm.

d) 4-[(3,5-Dicyan-4-methyl-2-thiophenyl)azo]-2-decyloxy-1-naphthol, Fp. 112-114°C
aus 2-Amino-3,5-dicyan-4-methylthiophen
Transmissionsspektren bei saurem bzw. alkalischem pH in o-Nitrophenyloctylether ergeben $\lambda_{max}$-Werte von 458 bzw. 622 nm.

Beispiel 6

4-[(2,4-Dinitrophenyl)azo]-5-octadecyloxy-1-naphthol

a) 5-Octadecyloxy-1-naphthol

In einem 2 l Dreihalskolben mit Claisenaufsatz, Thermometer, Calciumchloridrohr und Tropfrichter suspendiert man 40 g (0,25 mol) 1,5-Dihydroxynaphthalin (Janssen 99 %) in 400 ml frisch destilliertem Dimethylformamid und gibt unter Rühren 6 g (0,25 mol) 97 % Natriumhydrid in kleinen Portionen innerhalb 40 Minuten zu. Dabei tritt neben Wasserstoffentwicklung und Temperaturanstieg auf 36°C Lösung unter Blaufärbung ein. Man rührt noch 30 Minuten nach und tropft in die 35°C warme Lösung 83,3 g (0,25 mol) 96 %iges 1-Octadecylbromid innerhalb 10 Minuten zu. Sodann rührt man 24 Stunden bei Raumtemperatur nach. Das angefallene Rohprodukt wird scharf abgesaugt und der Rückstand 15 Minuten mit 600 ml Wasser angerührt. Diese Prozedur wird nochmals wiederholt und der Filterrückstand solange mit Wasser (ca. 800 ml) gewaschen, bis das Filtrat farblos ist. Danach trocknet man den Filterkuchen bei 40°C im Trockenschrank über Diphosphorpentoxid. Man erhält 98,6 g hellbeige Kristalle vom Schmelzpunkt 76-78°C.

Zur Weiterreinigung rührt man das Produkt dreimal mit je 750 ml Essigsäureethylester an, filtriert die ungelösten Anteile (40,8 g) hellbeige Kristalle ab, behandelt die Mutterlauge zweimal mit Kohle und engt im Vakuum ein. Man erhält 53,2 g (51,9 %) beigefarbene Kristalle der Titelverbindung vom Schmp. 90-92°C.

DC, Kieselgel 60 (Merck), Laufmittel: Toluol/Methanol = 50:1, $R_f$ = 0,36

b) 4-[(2,4-Dinitrophenyl)azo]-5-octadecyloxy-1-naphthol

Mit dem Produkt aus Beispiel 6 a) und 2,4-Dinitroanilin wird analog Beispiel 2 c) 4-[(2,4-Dinitrophenyl)azo]-5-octadecyloxy-1-naphthol hergestellt. Die Aufreinigung des Rohprodukts erfolgt an Kieselgel 60

(Merck) mit Methylenchlorid als Laufmittel. Das Eluat ergibt nach Umkristallisieren aus Toluol/ Ligroin 30,2 % orangerote Kristalle, Fp. 122-123°C.
Transmissionsspektren bei saurem bzw. alkalischem pH in o-Nitrophenyloctylether ergeben $\lambda_{max}$-Werte von 470 bzw. 656 nm.

Beispiel 7

Analog Beispiel 6 können auch folgende Substanzen hergestellt werden:

a) 4-[2,6-Dibrom-4-nitrophenyl)azo]-5-octadecyloxy-1-naphthol, Fp. 81-82°C aus 2,6-Dibrom-4-nitroanilin
b) 4-[(2-Chlor-4,6-dinitrophenyl)azo]-5-octadecyloxy-1-naphthol, Fp. 110-111°C aus 2-Chlor-4,6-dinitroanilin
Transmissionsspektren bei saurem bzw. alkalischem pH in o-Nitrophenyloctylether ergeben $\lambda_{max}$-Werte von 445 bzw. 658 nm.
c) 4-[(2-Brom-6-cyan-4-nitrophenyl)azo]-5-octadecyloxy-1-naphthol DC, Kieselgel 60 (Merck), Laufmittel: Methylenchlorid, $R_f = 0,6$
aus 2-Brom-6-cyan-4-nitroanilin
Transmissionssprektren bei saurem bzw. alkalischem pH in o-Nitrophenyloctylether ergeben $\lambda_{max}$-Werte von 440 bzw. 658 nm.
d) 4[(2-Brom-4-nitrophenyl)azo]-5-octadecyloxy-1-naphthol, DC, Kieselgel 60 (Merck), Laufmittel: Methylenchlorid, $R_f = 0,26$ aus 2-Brom-4-nitroanilin

Beispiel 8

4-[(2,4-Dinitrophenyl)azo]-5-decyloxy-1-naphthol

a) 5-Decyloxy-1-naphthol
Man löst 12 g (0,3 Mol) Natriumhydroxid unter Erwärmen in 500 ml Ethanol und gibt zu der abgekühlten Lösung innerhalb 20 Minuten eine Lösung von 25 g (0,15 Mol) 1,5-Di-hydroxynaphthalin 97 %. Danach tropft man innerhalb 20 Minuten 40,23 g (0,15 Mol) n-Decyljodid zu und kocht anschließend 4 Stunden unter Rückfluß. Nach Absaugen des anorganischen Rückstands wird das Filtrat im Vakuum eingeengt und der dunkelbraune, halbkristalline Rückstand, säulenchromatographisch an Kieselgel 60 (Merck) gereinigt. Laufmittel: Toluol/Methanol = 7:1. Das entsprechende Eluat gibt nach Umkristallisieren aus n-Heptan 11,5 g (25,3 % der Theorie) Produkt, hellbraune Kristalle, Fp. 85-87°C.
b) 4-[(2,4-Dinitrophenyl)azo]-5-decyloxy-1-naphthol
Mit dem Produkt aus Beispiel 8 a) und 2,4-Dinitroanilin wird analog Beispiel 2 c) 4-[(2,4-Dinitrophenyl)azo]-5-decyloxyl-1-naphthol hergestellt. Das Rohprodukt wird chromatographisch gereinigt an Kieselgel 60 (Merck). Laufmittel ist Methylenchlorid. Nach Umkristallisieren der entsprechenden Fraktionen aus Methylenchlorid/Ligroin erhält man 35.6 % Produkt als orangerote Kristalle, Fp. 145-147°C.
Transmissionsspektren bei saurem bzw. alkalischem pH in o-Nitrophenyloctylether ergeben $\lambda_{max}$-Werte von 448 bzw. 655 nm.

Beispiel 9

Analog Beispiel 8 können folgende Substanzen hergestellt werden:

a) 4-[(2-Brom-4-nitrophenyl)azo]-5-decyloxy-1-naphthol, Fp. 83-87°C aus 2-Brom-4-nitroanilin
Transmissionsspektren bei saurem bzw. alkalischem pH in o-Nitrophenyloctylether ergeben $\lambda_{max}$-Werte von 445 bzw. 672 nm.
b) 4-[(2-Chlor-4-nitrophenyl)azo]-5-decyloxy-1-naphthol, Fp. 94-97 °C aus 2-Chlor-4-nitroanilin
Transmissionsspektren bei saurem bzw. alkalischem pH n o-Nitrophenyloctylether ergeben $\lambda_{max}$-Werte von 444 bzw. 674 nm.
c) 4-[(2-Chlor-4,6-dinitrophenyl)azo]-5-decyloxy-1-naphthol, Fp. 134-135 °C aus 2-Chlor-4,6-dinitroanilin
Transmissionsspektren bei saurem bzw. alkalischem pH n o-Nitrophenyloctylether ergeben $\lambda_{max}$-Werte von 436 bzw. 656 nm.

d) 4-[(2-Brom-6-cyan-4-nitrophenyl)azo]-5-decyloxy-1-naphthol Fp. 110-114 °C
aus 2-Brom-6-cyan-4-nitroanilin
Transmissionsspektren bei saurem bzw. alkalischem pH n o-Nitrophenyloctylether ergeben $\lambda_{max}$-Werte von 446 bzw. 658 nm.

Beispiel 10

Allgemeine Herstellvorschrift für Testträger

Zur Herstellung eines Testträgers gemäß Fig. 1 wird durchsichtige Polyesterfolie (200 µm dick) mit den in den nachfolgenden Beispielen genannten Mischungen beschichtet und getrocknet. Die beschichtete Folie wird in 15 mm breite Streifen geschnitten und mittels Schmelzkleber als Schicht (1) längs auf 150 mm breite weiße Polyesterfolie (5) geklebt. Ebenso werden Streifen von Glasfaservlies mit einem Flächengewicht von 30 g/m² als Transportschicht (2), Glasfaservlies mit einem Flächengewicht von 60 g/m² als Abtrennschicht (3) und Polyamidgewebe als Schutzschicht (4) längs auf diese weiße Polyesterfolie geklebt, so daß nach Querschneider 6 mm breite Teststreifen gemäß Fig. 1 entstehen. Testträger gemäß Fig. 2 werden analog hergestellt. Die Schicht (11) besteht aus Filterpapier, das mit Puffersubstanz imprägniert ist.

Die erfindungsgemäße Filmschicht bzw. Testträger werden so eingesetzt, daß auf das Polyamidgewebe (4) 30 µl der zu untersuchenden Probe aufgebracht und der Testträger danach in das handelsübliche Reflexionsphotometer Reflotron® (Boehringer Mannheim GmbH, Mannheim, Bundesrepublik Deutschland) eingeführt wird. Die Flüssigkeit dringt in das Glasfaservlies (3) ein, wo im Falle von Vollblut die Erythrozyten abgetrennt werden und gelangt in die als Transportschicht dienende Glasfaserzone (2). Im Reflexionsphotometer wird der Film unter der Klappe (1) bzw. (10) durch Druck auf die Klappe mit der Flüssigkeit in der Transportschicht (2) in Berührung gebracht und die entstehende Farbe wird bei 642 nm und 37 °C reflexionsphotometrisch gemessen.

Beispiel 11

Es wird eine Mischung der nachfolgenden Zusammensetzung hergestellt und mit einer Naßfilmdicke von 300 µm auf eine durchsichtige Polyesterfolie aufgebracht und getrocknet:

| | |
|---|---|
| Vinylacetat-vinyllaurat-Copolymer (Vinnapas®B 500/20 VL, Wacker Chemie, München, Deutschland)) | 11,8 g |
| 2,2-Diphenyl-1-cyano-acrylsäure-äthylhexylester (Uvinul® N539, BASF, Ludwigshafen, Deutschland) | 14,4 g |
| 4-[(2-Chlor-4-nitrophenyl)azo-]-5-decyloxy-1-naphthol (aus Beispiel 9 b) | 0,0573 g |
| Valinomycin | 0,2406 g |
| Diatomeenerde (Celatom®MW 25, Eagle-Picher, Cincinatti, USA) | 22,6 g |
| Essigsäurebutylester | 40,7 g |

Auf diese Schicht wird mit einer Naßfilmdicke von 150 µm eine zweite Schicht folgender Zusammensetzung aufgebracht und gleichfalls getrocknet:

| | |
|---|---|
| Hydroxyäthylcellulose (Natrosol® 250G, Hercules Inc., Willmington, Dellaware, USA) 2 % in Wasser | 25 g |
| Citronensäure | 2,18 g |
| Ethanol | 35 ml |
| mit LiOH auf pH 5,0 eingestellt | |

Aus der beschichteten Folie werden wie in Beispiel 10 beschrieben Teststreifen hergestellt und vermessen. Die Messung erfolgt 60 Sekunden nach Berührung der Probe mit dem Reagenzfilm.

Bei der Verwendung von Seren mit verschiedenen Gehalten an Kalium wird folgende Abhängigkeit der Reflektion (%R) vom Kaliumgehalt gefunden:

Tabelle 2

| Kaliumgehalt [mmol Kalium/l] | Reflektion [% R] |
|---|---|
| 0,24 | 49,5 |
| 1,09 | 45,5 |
| 1,87 | 43,3 |
| 3,18 | 39,7 |
| 4,15 | 38,8 |
| 6,08 | 34,6 |
| 8,10 | 32,3 |
| 10,22 | 31,3 |
| 12,10 | 29,7 |

Ähnliche Ergebnisse werden erhalten mit folgenden erfindungsgemäßen Naphtholderivaten:

a) 4-[(2-Chlor-4,6-dinitrophenyl)azo-]-5-octadecyloxy-1-naphthol (Beispiel 7 b)

b) 4-[(2-Chlor-4,6-dinitrophenyl)azo-]-2-octadecyloxy-1-naphthol (Beispiel 3 i)

Beispiel 12

In Analogie zu Beispiel 11 wird ein Teststreifen hergestellt mit dem Unterschied, daß als pH-Indikator 0,0779 g 4-[(2,6-Dibrom-4-nitrophenyl)azo-]-2-octadecyloxy-1-naphthol (Beispiel 2) und als Puffer 2,67 g N,N-Bis-(hydroxyäthyl)-aminoäthansulfonsäure (BES), mit LiOH auf pH 7,0 eingestellt, verwendet werden.

Die Meßwerte mit Seren mit verschiedenen Gehalten an Kalium sind wie folgt:

Tabelle 3

| Kaliumgehalt [mmol Kalium/l] | Reflektion [% R] |
|---|---|
| 0,24 | 51,6 |
| 1,09 | 46,2 |
| 1,87 | 42,8 |
| 3,18 | 38,6 |
| 4,15 | 36,5 |
| 6,08 | 33,1 |
| 8,10 | 30,4 |
| 10,22 | 28,5 |
| 12,10 | 27,0 |

Ähnliche Ergebnisse werden erhalten mit folgenden pH-Indikatoren:
a) 4-[2-Cyan-4-nitrophenyl)azo]-2-octadecyloxy-1-naphthol (Beispiel 3 f)
b) 4-[(2-Cyan-4-nitrophenyl)azo-]-2-decyloxy-1-naphthol (Beispiel 4)
c) 2-(3,7,11,15-Tetramethyl-2-hexadecenyl)-3-methyl-4-[(2,4-dinitrophenyl)azo]-1-naphthol (Beispiel 1 a)
d) 4-[(2-Brom-4-nitro-6-trifluormethyl-phenyl)azo-]-2-octadecyloxy-1-naphthol (Beispiel 3 p)

Beispiel 13

In Analogie zu Beispiel 11 wird ein Teststreifen hergestellt mit dem Unterschied, daß als Indikator 0,0634 g 2-(3,7,11,15-Tetramethyl-2-hexadecenyl)-3-methyl-4-[(4-nitrophenyl)-azo]-1-naphthol (Beispiel 1 b) und als Puffer 0,773 g Borsäure, mit LiOH auf pH 9,5 eingestellt, verwendet werden.

Mit Seren mit verschiedenen Gehalten an Kalium werden folgende Reflektionswerte gemessen:

Tabelle 4

| Kaliumgehalt [mmol Kalium/l] | Reflektion [% R] |
|---|---|
| 0,24 | 52,7 |
| 1,09 | 47,3 |
| 1,87 | 43,6 |
| 3,18 | 39,3 |
| 4,15 | 37,7 |
| 6,08 | 33,9 |
| 8,10 | 31,4 |
| 10,22 | 29,4 |
| 12,10 | 27,9 |

Ähnliche Ergebnisse werden erhalten mit folgenden Indikatoren:
a) 4-[(2-Brom-4-nitrophenyl)azo-]-5-decyloxy-1-naphthol (Beispiel 9 a)
b) 2-(3,7,11,15-Tetramethyl-2-hexadecenyl)-3-methyl-4-[(2,4-dinitrophenyl)azo]-1-naphthol (Beispiel 1 a)
c) 2-(3,7,11,15-Tetramethyl-2-hexadecenyl)-3-methyl-4-[(2-methyl-4-nitrophenyl)azo]-1-naphthol (Beispiel 1 c)
d) 2-(3,7,11,15-Tetramethyl-2-hexadecenyl)-3-methyl-4-[(5-nitro-2-thiazolyl)azo]-1-naphthol (Beispiel 1 j)

**Patentansprüche**

1. Naphtholderivat der allgemeinen Formel I

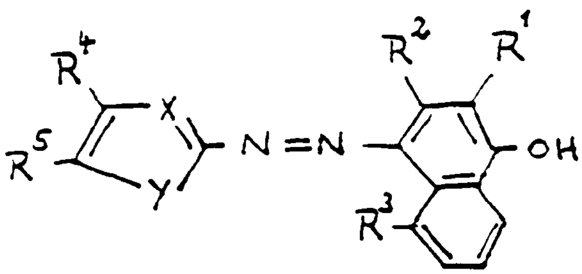

(I)

in der

| | |
|---|---|
| $R^1$, $R^2$, $R^3$ | gleich oder verschieden sind und jeweils Wasserstoff, eine Alkyl- oder Alkoxygruppe darstellen, wobei mindestens einer der Reste ein ($C_8$-$C_{30}$)-Alkyl- oder Alkoxyrest ist, |
| $R^4$ | Wasserstoff oder eine Alkylgruppe, |
| $R^5$ | eine Nitrogruppe, eine durch Halogen substituierte Alkylgruppe, eine Cyanogruppe, eine Sulfonamidgruppe oder eine Alkylsulfonylgruppe, |
| X | Stickstoff oder den Rest $CR^6$ und |
| Y | Schwefel oder den Rest $CR^7 = CR^8$, |

wobei $R^6$, $R^7$, $R^8$ gleich oder verschieden sind und jeweils Wasserstoff, Halogen, eine Nitrogruppe, eine Cyanogruppe, eine Alkyl- oder durch Halogen substituierte Alkylgruppe oder eine Alkylsulfonylgruppe bedeuten.

2. Naphtholderivat gemäß Anspruch 1, dadurch gekennzeichnet, daß einer der Reste $R^1$, $R^2$ und $R^3$ einen Alkyl- oder Alkoxyrest mit 8 - 30 C-Atomen darstellt und die übrigen Wasserstoff oder einen Alkylrest mit 1 - 4 C-Atomen bedeuten.

3. Naphtholderivat gemäß einem der Ansprüche 1 und 2, dadurch gekennzeichnet, daß $R^1$ eine Alkoxygruppe mit 10 - 20 C-Atomen und $R^2$ und $R^3$ Wasserstoff bedeuten.

4. Verfahren zur Herstellung eines Naphtholderivates gemäß Anspruch 1, dadurch gekennzeichnet, daß
   a) ein Naphthochinon der allgemeinen Formel II

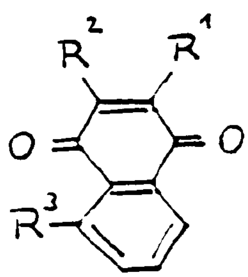

(II)

in der
$R^1$, $R^2$, $R^3$ gleich oder verschieden sind und jeweils Wasserstoff, eine Alkyl- oder Alkoxygruppe darstellen, wobei mindestens einer der Reste ein ($C_8$-$C_{30}$)-Alkyl- oder Alkoxyrest ist
mit einem Hydrazin der allgemeinen Formel III

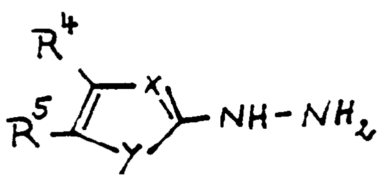

(III)

in der

$R^4$ Wasserstoff oder eine Alkylgruppe,

$R^5$ eine Nitrogruppe, eine durch Halogen substituierte Alkylgruppe, eine Cyanogruppe, eine Sulfonamidgruppe oder eine Alkylsulfonylgruppe,

X Stickstoff oder den Rest $CR^6$ und

Y Schwefel oder den Rest $CR^7 = CR^8$,

wobei $R^6$, $R^7$, $R^8$ gleich oder verschieden sind und jeweils Wasserstoff, Halogen, eine Nitrogruppe, eine Cyanogruppe, eine Alkyl- oder durch Halogen substituierte Alkylgruppe oder eine Alkylsulfonylgruppe bedeuten, umgesetzt wird, oder

b) ein Amin der allgemeinen Formel IV

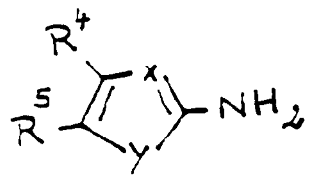

(IV)

in der

$R^4$, $R^5$, X und Y die vorstehend unter a) angegebene Bedeutung haben

in das entsprechende Diazoniumsalz überführt wird und mit einem Naphthol der allgemeinen Formel V

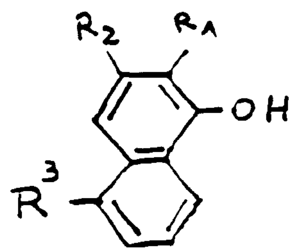

(V)

in der $R^1$, $R^2$ und $R^3$ die vorstehend unter a) angegebene Bedeutung haben

in einer Azokupplungsreaktion umgesetzt wird.

5. Verwendung eines Naphtholderivates gemäß einem der Ansprüche 1 bis 3 als pH-Indikator.

6. Verfahren zur Bestimmung eines Ions in einer wässrigen Flüssigkeit, wobei das Ion in eine mit der wässrigen Flüssigkeit nicht mischbare Phase gelangt und ein dort anwesender pH-Indikator dadurch eine Farbänderung erfährt, welche zur Bestimmung des Ions herangezogen wird, dadurch gekennzeichnet, daß als pH-Indikator ein Naphtholderivat gemäß einem der Ansprüche 1 bis 3 eingesetzt wird.

7. Mittel zur Bestimmung eines Ions in einer wässrigen Flüssigkeit, enthaltend einen Ionophor und einen pH-Indikator in einem mit Wasser nicht mischbaren Medium, dadurch gekennzeichnet, daß der pH-Indikator ein Naphtholderivat gemäß einem der Ansprüche 1 bis 3 ist.

8. Verwendung eines Naphtholderivates gemäß einem der Ansprüche 1 bis 3 zur Herstellung eines Mittels zur Bestimmung eines Ions.

## Claims

1. Naphthol derivative of the general formula I

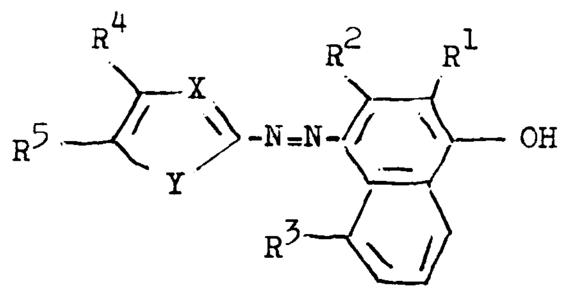

(I)

in which $R^1$, $R^2$, $R^3$ are the same or different and, in each case, represent hydrogen, an alkyl or alkoxy group, whereby at least one of the radicals is a ($C_8$-$C_{30}$)-alkyl or alkoxy radical, $R^4$ hydrogen or an alkyl group, $R^5$ a nitro group, an alkyl group substituted by halogen, a cyano group, a sulphonamido group or an alkylsulphonyl group, X nitrogen or the radical $CR^6$ and Y sulphur or the radical $CR^7$=$CR^8$, whereby $R^6$, $R^7$, $R^8$ are the same or diffferent and in each case signify hydrogen, halogen, a nitro group, a cyano group, an alkyl or alkyl group substituted by halogen or an alkylsulphonyl group.

2. Naphthol derivative according to claim 1, characterised in that one of the radicals $R^1$, $R^2$ and $R^3$ represents an alkyl or alkoxy radical with 8 - 30 C-atoms and the others represent hydrogen or an alkyl radical with 1 - 4 C-atoms.

3. Naphthol derivative according to one of claims 1 and 2, characterised in that $R^1$ signifies an alkoxy group with 10 - 20 C-atoms and $R^2$ and $R^3$ hydrogen.

4. Process for the preparation of a naphthol derivative according to claim 1, characterised in that
a) a naphthoquinone of the general formula II

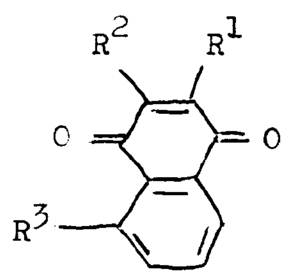

(II)

in which $R^1$, $R^2$, $R^3$ are the same or different and, in each case, represent hydrogen, an alkyl or alkoxy group, whereby at least one of the radicals is a ($C_8$-$C_{30}$) -alkyl or alkoxy radical, is reacted with a hydrazine of the general formula III

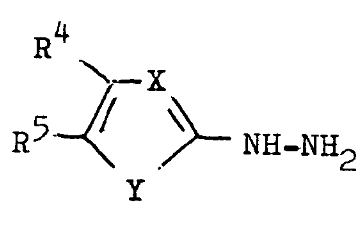

(III)

in which $R^4$ signifies hydrogen or an alkyl group, $R^5$ a nitro group, an alkyl group substituted by halogen, a cyano group, a sulphonamide group or an alkylsulphonyl group, X nitrogen or the radical $CR^6$ and Y sulphur or the radical $CR^7$=$CR^8$, whereby $R^6$, $R^7$, $R^8$ are the same or different and each signifies hydrogen, halogen, a nitro group, a cyano group, an alkyl or alkyl substituted by halogen or an alkylsulphonyl group, or
b) an amine of the general formula IV

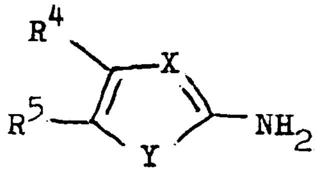

(IV)

in which $R^4$, $R^5$, X and Y have the meaning given above under a), is converted into the corresponding diazonium salt and reacted in a azocoupling reaction with a naphthol of the general formula V

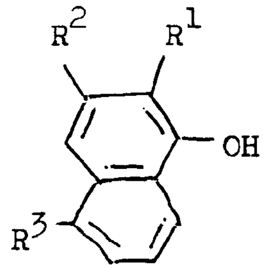

(V)

in which $R^1$, $R^2$ and $R^3$ have the meaning given above under a).

5. Use of a naphthol derivative according to one of claims 1 to 3 as pH indicator.

6. Process for the determination of an ion in an aqueous liquid, whereby the ion passes into a phase not miscible with an aqueous liquid and a pH indicator there present thereby undergoes a colour change which is employed for the determination of the ion, characterised in that a naphthol derivative according to one of claims 1 to 3 is used as pH indicator.

7. Agent for the determination of an ion in an aqueous liquid containing an ionophore and a pH indicator in a medium not miscible with water, characterised in that the pH indicator is a naphthol derivative according to one of claims 1 to 3.

8. Use of a naphthol derivative according to one of claims 1 to 3 for the preparation of an agent for the determination of an ion.

## Revendications

1. Dérivé de naphtol de formule générale I

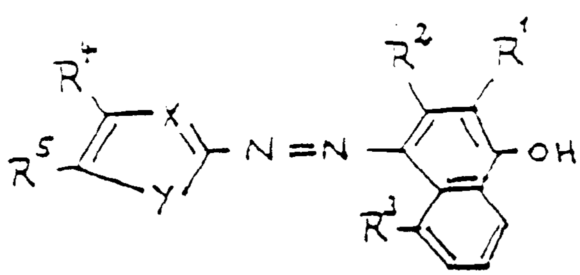

(I)

dans laquelle

| | |
|---|---|
| $R^1$, $R^2$, $R^3$ | sont identiques ou différents et représentent chacun un atome d'hydrogène, un groupe alkyle ou alcoxy, au moins l'un des restes représentant un groupe alkyle ou alcoxy en $C_8$-$C_{30}$, |
| $R^4$ | représente un atome d'hydrogène ou un groupe alkyle, |
| $R^5$ | représente un groupe nitro, un groupe alkyle substitué par un halogène, un groupe cyano, un groupe sulfonamide ou un groupe alkylsulfonyle, |

X représente un atome d'azote ou le reste $CR^6$, et
Y représente un atome de soufre ou le reste $CR^7=CR^8$,
$R^6$, $R^7$, $R^8$ peuvent être identiques ou différents et représentent chacun un atome d'hydrogène, un atome d'halogène, un groupe nitro, un groupe cyano, un groupe alkyle ou un groupe alkyle substitué par un halogène, ou un groupe alkylsulfonyle.

2. Dérivé de naphtol selon la revendication 1, caractérisé en ce que l'un des restes $R^1$, $R^2$, $R^3$ représente un groupe alkyle ou alcoxy ayant 8 - 30 atomes de C, et les autres représentent l'hydrogène ou un groupe alkyle ayant 1 - 4 atomes de C.

3. Dérivé de naphtol selon l'une quelconque des revendications 1 et 2, caractérisé en ce que $R^1$ représente un groupe alcoxy ayant 10 - 20 atomes de C et $R^2$et $R^3$ représentent l'hydrogène.

4. Procédé de préparation d'un dérivé de naphtol selon la revendication 1, caractérisé en ce que
a) on fait réagir une naphtoquinone de formule générale II

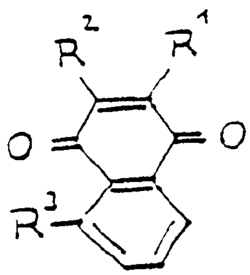

(II)

dans laquellle
$R^1$, $R^2$, $R^3$ sont identiques ou différents et représentent chacun un atome d'hydrogène, un groupe alkyle ou alcoxy, au moins l'un des restes représentant un groupe alkyle ou alcoxy en $C_8$-$C_{30}$,
avec une hydrazine de formule générale III

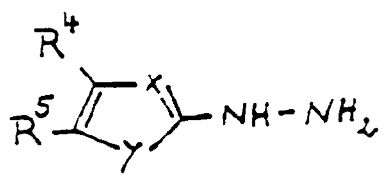

(III)

dans laquelle
$R^4$ représente un atome d'hydrogène ou un groupe alkyle,
$R^5$ représente un groupe nitro, un groupe alkyle substitué par un halogène, un groupe cyano, un groupe sulfonamide ou un groupe alkylsulfonyle,
X représente un atome d'azote ou le reste $CR^6$, et
Y représente un atome de soufre ou le reste $CR^7=CR^8$,
$R^6$, $R^7$, $R^8$ peuvent être identiques ou différents et représentent chacun un atome d'hydrogène, un atome d'halogène, un groupe nitro, un groupe cyano, un groupe alkyle ou un groupe alkyle substitué par un halogène, ou un groupe alkylsulfonyle,
ou bien
b) on transforme une amine de formule générale IV

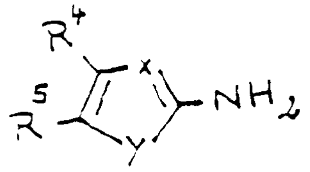

(IV)

dans laquelle
$R^4$, $R^5$ X et Y ont les significations indiquées en a),
en le sel de diazonium correspondant, et on fait réagir celui-ci avec un naphtol de formule générale V

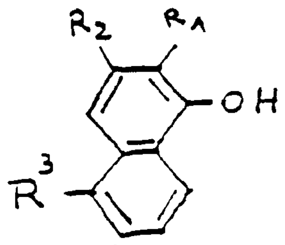

(V)

dans laquelle
$R^1$, $R^2$ et $R^3$ ont les significations indiquées en a),
au cours d'une réaction de couplage azoïque.

5. Utilisation d'un dérivé de naphtol selon l'une quelconque des revendications 1 à 3, comme indicateur de pH.

6. Procédé de détermination d'un ion dans un liquide aqueux, dans lequel on fait passer l'ion dans une phase non miscible avec le liquide aqueux, et un indicateur de pH présent dans le liquide provoque un virage colorimétrique que l'on utilise pour la détermination d'ions, caractérisé en ce que comme indicateur de pH, on utilise un dérivé de naphtol selon l'une quelconque des revendications 1 à 3.

7. Agent de détermination d'un ion dans un liquide aqueux, contenant un agent ionophore et un indicateur de pH dans un milieu non miscible à l'eau, caractérisé en ce que l'indicateur de pH est un dérivé de naphtol selon l'une quelconque des revendications 1 à 3.

8. Utilisation d'un dérivé de naphtol selon l'une quelconque des revendications 1 à 3, pour la préparation d'un agent pour la détermination d'un ion.

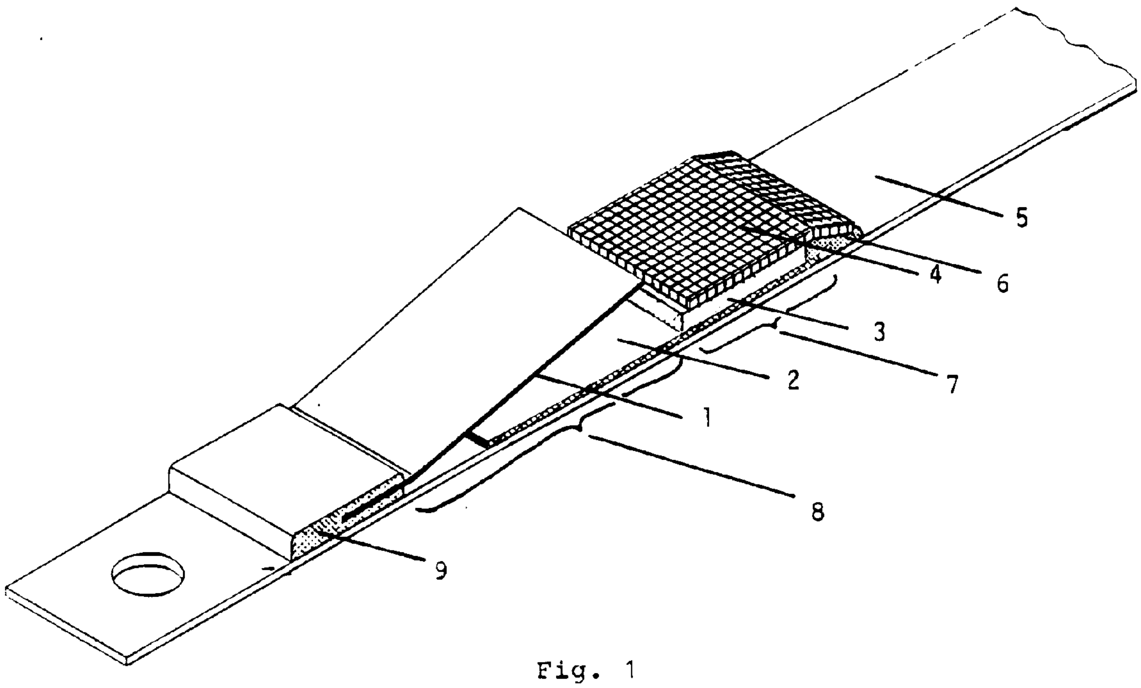


Fig. 1

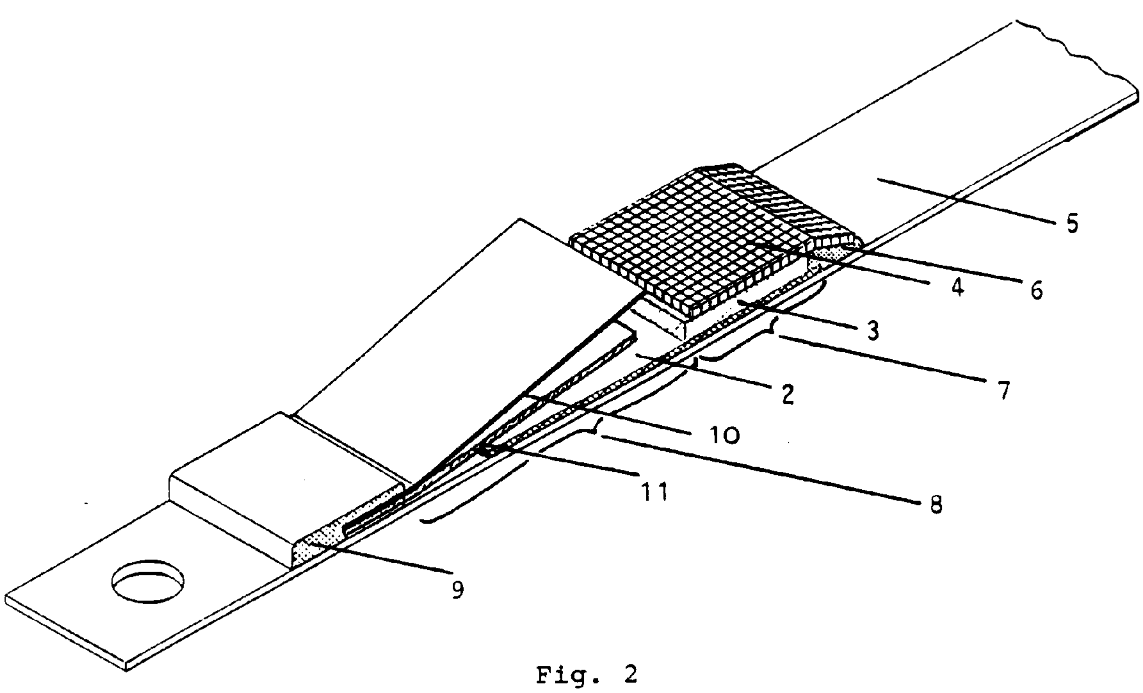


Fig. 2